# EUROPÄISCHE PATENTSCHRIFT

(11) **EP 3 686 110 B1**
(45) Veröffentlichungstag und Bekanntmachung des Hinweises auf die Patenterteilung: **25.11.2026**
(21) Anmeldenummer: 20152642.3
(22) Anmeldetag: 20.01.2020
(51) Int. Cl.: B65B 9/04, B65B 57/10

(54) **VERPACKUNGSMASCHINE**
PACKAGING MACHINE
MACHINE D'EMBALLAGE

(30) Priorität: 25.01.2019 DE 102019101852
(43) Veröffentlichungstag der Anmeldung: 29.07.2020
(73) Patentinhaber: Weber Food Technology SE & Co. KG, 35236 Breidenbach (DE)
(72) Erfinder:
(74) Vertreter: Manitz Finsterwald Patent- und Rechtsanwaltspartnerschaft mbB

(56) Entgegenhaltungen:
- EP-A2- 0 798 250
- EP-A2- 0 798 250
- DE-A1- 10 065 389
- US-A1- 2004 030 433
- US-A1- 2004 030 433
- US-A1- 2015 096 263
- US-A1- 2015 096 263
- US-A1- 2015 291 300
- ENGILICO SEALSCOPE - 100% SEAL INSPECTION: "SealScope(TM) 100% inline seal inspection and process monitoring", 12 April 2017 (2017-04-12), XP055872175, Retrieved from the Internet <URL:https://www.youtube.com/watch?v=zlm4wcL0BSc> [retrieved on 20211210]

## Beschreibung

Die Erfindung betrifft eine Verpackungsmaschine mit einer Mehrzahl von entlang einer Transportrichtung hintereinander angeordneten, insbesondere taktweise in einem gemeinsamen Maschinentakt betriebenen, Arbeitsstationen zum automatischen Herstellen von mit Produkten, insbesondere Lebensmittelprodukten, gefüllten Verpackungen aus wenigstens einer Unterfolie, die mittels einer Transporteinrichtung entlang der Maschine bewegt wird, und wenigstens einer Oberfolie, die auf die Unterfolie aufgebracht wird, um in der Unterfolie durch Umformen erzeugte und die Produkte enthaltende Vertiefungen zu verschließen.

Die Erfindung betrifft außerdem ein Verfahren zum Betrieb einer Verpackungsmaschine, insbesondere einer Verpackungsmaschine der hierin beschriebenen Art.

Bei einer Verpackungsmaschine der hierin beschriebenen Art müssen alle Arbeitsstationen relativ zueinander ausgerichtet werden. Eine Arbeitsstation kann ein oder mehrere Arbeitswerkzeuge umfassen. Die Ausrichtung einer Arbeitsstation kann darin bestehen, dass lediglich ein oder mehrere Arbeitswerkzeuge verstellt werden, die Arbeitsstation als Ganzes aber nicht bewegt zu werden braucht.

Die Ausrichtung einer Arbeitsstation bzw. eines Arbeitswerkzeuges betrifft insbesondere eine Ausrichtung in Längsrichtung, also in Transportrichtung, wobei aber auch eine Ausrichtung quer zur Transportrichtung erforderlich sein kann. Die Ausrichtung der Arbeitsstationen erfolgt beispielsweise im Rahmen der Inbetriebnahme der Maschine. Für einen Wechsel auf eine andere Anwendung muss die Maschine neu eingerichtet werden. Eine neue Maschineneinrichtung kann auch eine neue Ausrichtung der Arbeitsstationen beinhalten.

Eine Grundlage für die Ausrichtung ist die für eine jeweilige Anwendung gewünschte Verpackungslänge, also die Länge der einzelnen Verpackungen in Transportrichtung. Wenn die Verpackungsmaschine gemäß einer bevorzugten Ausgestaltung der Erfindung taktweise betrieben wird, umfasst jeder Arbeitstakt ein Vorziehen der Unterfolie um die für die jeweilige Anwendung fest vorgegebene Vorziehlänge, die auch als Taktlänge bezeichnet wird. Eine weitere Grundlage für die Ausrichtung der Arbeitsstationen ist bei einem taktweisen Betrieb der Verpackungsmaschine folglich diese Taktlänge.

Das Vorziehen der Unterfolie, allgemein also der Transport der Unterfolie in Transportrichtung der Verpackungsmaschine, erfolgt in der Praxis meist durch sogenannte Transportketten, die an den beiden Seiten der Maschine geführt, entsprechend der Breite der Unterfolie quer zur Transportrichtung beabstandet und synchron angetrieben sind. Die Transportketten sind mit Klemmeinrichtungen versehen, mittels welchen die Transportketten die seitlichen Randbereiche der Unterfolie festhalten und so die Unterfolie - je nach Anwendung kontinuierlich oder taktweise - in Transportrichtung durch die Verpackungsmaschine bewegen. Aufbau und Funktionsweise derartiger Transportketten sind dem Fachmann grundsätzlich bekannt, weshalb hierauf nicht näher eingegangen zu werden braucht.

Eine ideale, sich durch eine exakte Ausrichtung der Arbeitsstationen bzw. Arbeitswerkzeuge auszeichnende Maschineneinrichtung wird in der Praxis durch verschiedene Faktoren nachteilig beeinflusst. Bei diesen Faktoren handelt es sich insbesondere um Funktions- oder Ausrichtungsfehler der Arbeitsstationen, Arbeitswerkzeuge oder anderer Maschinenkomponenten. Diese Fehler können zu Fehlausrichtungen, also zu Abweichungen von der Idealausrichtung der Arbeitsstationen oder der Arbeitswerkzeuge, sowohl in Transportrichtung als auch in Querrichtung führen. Diese Maschinenfehler haben Verpackungsfehler zur Folge, welche zu mangelhaften und damit minderwertigen oder unverkäuflichen Verpackungen führen können.

Ein praxisrelevanter Problemkreis zum Beispiel betrifft die auch als Mulden bezeichneten Vertiefungen in der Unterfolie, die an einem relativ weit stromaufwärts der Verpackungsmaschine gelegenen Arbeitsbereich durch eine sogenannte Formstation gebildet werden, die auch als Tiefzieher oder Thermoformer bezeichnet wird. Die Positionen der Vertiefungen relativ zu stromabwärts der Formstation gelegenen Arbeitsstationen können sich auch bei ordnungsgemäß arbeitender Formstation zeitlich vergleichsweise langsam verändern, da die Transportketten einem in der Praxis praktisch unvermeidbaren Prozess der Längung unterworfen sind. Längungen der Transportketten haben zur Folge, dass die der Formstation nachgelagerten Arbeitsprozesse nicht mehr positionsgenau erfolgen können. Falsche Einstellparameter beispielsweise an der Formstation oder Toleranzen in bestimmten Parametern der verwendeten Folienmaterialien können ebenfalls zu Fehlpositionierungen der Vertiefungen bezüglich nachfolgender Maschinenkomponenten führen.

Ein weiterer hier beispielhaft genannter Problemkreis betrifft die auf die Unterfolie aufzubringende Oberfolie. Die Oberfolie ist in der Praxis meist mit Merkmalen wie beispielsweise einer Bedruckung versehen. Wenn die Oberfolie nicht synchron zur Unterfolie bewegt wird, kann es folglich passieren, dass ein Merkmal der Oberfolie nicht korrekt relativ zu einem Merkmal der Unterfolie ausgerichtet ist. Beispielsweise ist dann eine Bedruckung der Oberfolie nicht in der vorgegebenen Weise mit der in der Unterfolie ausgebildeten Vertiefung ausgerichtet.

Das Verschließen der Vertiefungen mittels der Oberfolie, welches in der Praxis meist durch eine sogenannte Siegelstation erfolgt, an der Oberfolie und Unterfolie miteinander verbunden werden, kann einen weiteren Problemkreis darstellen, der zu Verpackungsfehlern führt. So kommt es in der Praxis vor, dass die mittels einer Siegelstation erzeugten, auch als Siegelnähte bezeichneten Siegel- oder Verbindungsstellen nicht korrekt relativ zu einem Merkmal der Unterfolie oder einem Merkmal der Oberfolie positioniert sind. Ein solcher Verpackungsfehler kann entweder durch eine Fehlfunktion oder Fehlausrichtung der Siegelstation oder eines oder mehrerer Arbeitswerkzeuge der Siegelstation oder durch einen bereits zuvor an einer stromaufwärts der Siegelstation verursachten Fehler - oder beides - verursacht werden. So können z.B. die Vertiefungen in der Unterfolie relativ zu einer Sollposition, die der Siegelstation an der Maschine in Transportrichtung zugeordnet ist, positioniert sein, weil die Formstation falsch ausgerichtet ist oder sich eine Längung der Transportkette bemerkbar macht. Zusätzlich kann es sein, dass die Siegelstation aufgrund eines Fehlers bei der Maschineneinrichtung oder eines falsch positionierten Ober- und/oder Unterwerkzeugs nicht die genannte Sollposition einnimmt. Beide Effekte zusammen können dazu führen, dass die in Querrichtung verlaufenden Siegelnähte entweder zu nahe am betreffenden Rand der Vertiefung liegen oder zu weit davon entfernt sind.

Wenn im Rahmen dieser Offenbarung von einem Siegeln oder Versiegeln die Rede ist, dann schließt dies ein Verbinden durch Schweißen oder Verschweißen nicht aus. Auf dem hier in Rede stehenden Fachgebiet werden beide Begriffe verwendet. Der Begriff "Siegeln" wird insbesondere dann verwendet, wenn thermoplastische Beschichtungen von Trägerstoffen unter Einwirkung von Wärme und ggf. auch von Druck miteinander verbunden werden, wobei die Trägerstoffe selbst nicht aufgeschmolzen werden. Von einem Schweißen spricht man insbesondere allgemein dann, wenn thermoplastische Kunststoffe unter Einwirkung von Wärme mit oder ohne Druck miteinander verbunden werden. Deshalb kann das Siegeln auch als Schweißen bezeichnet werden, wenn man lediglich die Beschichtungen betrachtet. Im Rahmen dieser Offenbarung sind daher die Begriffe "Siegeln" und "Schweißen" einander nicht ausschließend und folglich allgemein im Sinne von "Verbinden" zu verstehen. Umgekehrt ist der Begriff "Verbinden" so zu verstehen, dass er - je nach konkreter Anwendung und konkreten Materialien - sowohl ein Versiegeln als auch ein Verschweißen umfasst.

Generell ist folglich auch problematisch, dass eine Ursache oder mehrere Ursachen für einen Verpackungsfehler häufig nicht oder nicht eindeutig identifiziert werden können.

Ein weiterer potentieller Problemkreis, der Verpackungsfehler zur Folge haben kann, sind Trennstationen, an denen die bis dahin noch durch die Folien zusammenhängenden, durch die beiden Transportketten geführten Verpackungen voneinander getrennt und so letztlich vereinzelt werden. Ein Trennen der Verpackungen in Längsrichtung, also in Transportrichtung der Verpackungsmaschine, einerseits und in Querrichtung andererseits, erfolgt in der Praxis meist durch separate, in Transportrichtung aufeinanderfolgende Trenneinrichtungen. Als Trennwerkzeuge werden insbesondere Schneid- oder Stanzwerkzeuge eingesetzt. Wenn diese Werkzeuge falsch ausgerichtet sind und/oder es bereits stromaufwärts dieser Arbeitsstationen zu Fehlausrichtungen und somit Verpackungsfehlern gekommen ist, liegen die Trennstellen nicht korrekt relativ zu anderen Merkmalen der Oberfolie, Unterfolie bzw. Verpackung. Diese Fehler können sowohl in Transportrichtung als auch in Querrichtung auftreten.

In eine Verpackungsmaschine der hierin beschriebenen Art sind häufig eine oder mehrere Etikettierstationen integriert, um die hergestellten Verpackungen außerdem mit Etiketten zu versehen. Alternativ oder zusätzlich hierzu kann eine Verpackungsmaschine eine oder mehrere Bedruckungsstationen aufweisen, um die Unterfolie, die Oberfolie oder die Verpackung zu bedrucken. Fehlfunktionen oder Fehlausrichtungen dieser Stationen können dazu führen, dass die Etiketten bzw. Bedruckungen nicht in der jeweils vorgesehenen Weise lagegenau aufgebracht werden.

Eine Verpackungsmaschine ist beispielsweise aus US 2015/0096263 bekannt, wobei mittels mehrerer Detektionseinrichtungen auf einer Unterfolie angebrachte Markierungen detektiert werden können, um eine korrekte Ausrichtung von Arbeitsstationen vorzunehmen. Ferner zeigt EP 0 798 250 A2 eine Verpackungsmaschine für medizinische Nadeln, bei welcher der Betrieb durch Kontrollsysteme überwacht wird. US 2015/291300 A1 beschreibt eine Maschine zum Herstellen von Beuteln.

Aufgabe der Erfindung ist es, bei einer Verpackungsmaschine und einem Verfahren der eingangs genannten Art eine Möglichkeit zu schaffen, Verpackungsfehler zu vermeiden oder dem Entstehen von Verpackungsfehlern entgegenzuwirken.

Die Lösung dieser Aufgabe erfolgt jeweils durch die Merkmale der unabhängigen Ansprüche 1 und 4.

Bei der erfindungsgemäßen Verpackungsmaschine ist zumindest eine Messeinrichtung vorgesehen, die dazu angeordnet und eingerichtet ist, im Entstehen befindliche Verpackungen zu vermessen, wobei außerdem eine Steuereinrichtung vorgesehen ist, die dazu konfiguriert ist, anhand der Messungen der Messeinrichtung zumindest einen Verpackungsfehler zu erkennen, der an wenigstens einer der Arbeitsstationen entstanden ist, und den Betrieb an zumindest einer der Arbeitsstationen derart zu regeln, dass der Verpackungsfehler beseitigt oder reduziert wird.

Als Verpackungsfehler werden im Rahmen dieser Offenbarung Abweichungen von vorgegebenen Sollmaßen angesehen, die ein oder mehrere Merkmale der Verpackung betreffen.

Bei dem erfindungsgemäßen Verfahren werden mittels zumindest einer Messeinrichtung im Entstehen befindliche Verpackungen vermessen, und es wird mittels einer Steuereinrichtung anhand der Messungen der Messeinrichtung ein an wenigstens einer der Arbeitsstationen entstandener Verpackungsfehler erkannt und zur Beseitigung oder Reduzierung des Verpackungsfehlers der Betrieb an zumindest einer der Arbeitsstationen geregelt.

Die Erfindung macht sich zum Beseitigen oder Reduzieren von Verpackungsfehlern an einer Verpackungsmaschine das Konzept eines Regelkreises zunutze. Das Konzept der Erfindung besteht darin, tatsächlich entstandene Verpackungsfehler möglichst frühzeitig zu erkennen und nach einer bestimmten, von der jeweiligen Anwendung abhängigen Methode anhand eines erkannten Fehlers dessen Ursache zu bekämpfen, indem in den Betrieb einer oder mehrerer Arbeitsstationen eingegriffen wird.

**Im** Rahmen dieser Regelung kann ein Signal, das eine Veränderung im Betrieb einer oder mehrerer Arbeitsstationen bewirkt, hinsichtlich seiner Auswirkung überprüft werden, um eine Überreaktion oder Instabilität des Gesamtsystems zu vermeiden.

Der Begriff der Regelung soll hier insbesondere in dem üblichen technischen Sinne dahingehend verstanden werden, dass eine Regelgröße (Ist-Wert) erfasst, mit einer Führungsgröße (Soll-Wert) verglichen und im Sinne einer Angleichung an die Führungsgröße beeinflusst wird.

Die Steuereinrichtung ist dazu konfiguriert, die Funktion der Regelung auszuüben, d.h. Mittel wie insbesondere Hardware und Software, mit denen die Regelung durchgeführt wird, können zumindest teilweise in die Steuereinrichtung selbst implementiert sein oder mittels der Steuereinrichtung gesteuert oder betrieben werden. Wenn im Folgenden von Eigenschaften oder Wirkungen der Regelung die Rede ist, dann ist dies in erster Linie funktional zu verstehen, sofern nichts anderes erwähnt ist und z.B. auf konkrete strukturelle oder softwaremäßig realisierte Mittel eingegangen wird.

Erfindungsgemäß kann die Regelung automatisch erfolgen. Hierbei können von der jeweiligen Anwendung abhängige Algorithmen, gegebenenfalls unter Einbeziehung von KI-Methoden (KI = Künstliche Intelligenz), eingesetzt werden. Es ist also möglich, dass in die Steuereinrichtung lernende Software implementiert ist. Ferner ist es möglich, eingelernte Software zu verwenden, d.h. Software, die zuvor mittels fehlerhafter Verpackungen mit bekannter Fehlerursache trainiert wurde.

Die Ausgestaltung der Messeinrichtung, die Art und Weise der Erfassung der Verpackungsfehler sowie die Art und Weise der Beeinflussung des Betriebs einer oder mehrerer Arbeitsstationen sind von der jeweiligen Anwendung abhängig.

Bevorzugt werden die Verpackungen - bezogen auf eine Position entlang der Verpackungsmaschine - nach einer oder mehreren stromabwärtigen Arbeitsstationen vermessen, wobei zur Beseitigung oder Reduzierung von dabei erkannten Verpackungsfehlern der Betrieb einer oder mehrerer stromaufwärtiger Arbeitsstationen geregelt wird.

Die Regelung des Betriebs einer Arbeitsstation umfasst insbesondere das Verändern oder Einstellen eines oder mehrerer Betriebsparameter der Arbeitsstation.

Bevorzugte Ausführungsformen der Erfindung sind auch in den abhängigen Ansprüchen, der Beschreibung sowie der Zeichnung angegeben.

Es kann auch vorgesehen sein, dass ausschließlich an einer Endposition in Transportrichtung, an der fertig hergestellte Verpackungen vorliegen, die entweder noch nicht vereinzelt sind oder die bereits vereinzelt sind, zumindest eine Messeinrichtung angeordnet ist. Hierdurch erfolgt ausschließlich eine so genannte Endof-line-Kontrolle der fertig hergestellten Verpackungen. In Abhängigkeit von den jeweiligen Gegebenheiten kann folglich eine einzige Kontrollstelle, an der eine oder mehrere Messeinrichtungen angeordnet sind, ausreichen, um einen oder mehrere Verpackungsfehler zu erkennen und eine oder mehrere Arbeitsstationen so zu regeln, dass der oder jeder Verpackungsfehler reduziert oder beseitigt wird.

Gemäß einem Ausführungsbeispiel ist die Messeinrichtung dazu angeordnet und eingerichtet, fertig hergestellte Verpackungen zu vermessen, wobei die Steuereinrichtung dazu konfiguriert ist, in Abhängigkeit von einem oder mehreren erkannten Verpackungsfehlern den Betrieb an einer oder mehreren der Arbeitsstationen zu regeln.

Gemäß einer Variante der Erfindung kann vorgesehen sein, dass die Messeinrichtung nach einer Arbeitsstation angeordnet und die Steuereinrichtung dazu konfiguriert ist, den Betrieb nur an dieser Arbeitsstation zu regeln.

Eine andere mögliche Variante sieht vor, dass nach mehreren, insbesondere nach allen, Arbeitsstationen jeweils eine dieser Arbeitsstation zugeordnete Messeinrichtung angeordnet und die Steuereinrichtung dazu konfiguriert ist, den Betrieb jeder Arbeitsstation anhand der Messungen der jeweils zugeordneten Messeinrichtung zu regeln.

Vorzugsweise ist die Messeinrichtung zu einer berührungslosen Vermessung der Verpackungen ausgebildet. Bevorzugt erfolgt die Vermessung auf optischem Wege. Die Messeinrichtung kann z.B. einen Laserscanner umfassen. Ferner kann die Messeinrichtung nach dem Prinzip der Triangulation arbeiten. Des Weiteren können optische Verfahren oder Bildverarbeitung zum Einsatz kommen.

Gemäß einem weiteren Ausführungsbeispiel ist die Steuereinrichtung dazu konfiguriert, einen Verpackungsfehler zu erkennen, wenn ein von der Messeinrichtung aufgenommenes Ist-Bild von einem Referenzbild abweicht.

Das Referenzbild repräsentiert insbesondere eine fertige oder im Entstehen befindliche Verpackung, bei welcher das Merkmal oder die jeweiligen Merkmale, um deren Überprüfung es bei der betreffenden Messeinrichtung gerade geht, zumindest im Rahmen einer vorgegebenen Toleranz fehlerfrei ausgebildet oder angeordnet sind. Auf dem Referenzbild beispielsweise einer als fehlerfrei geltenden Verpackung unmittelbar im Anschluss an die Siegelstation haben die in Querrichtung verlaufenden Siegelnähte jeweils einen in einem Toleranzbereich liegenden Abstand von dem in Transportrichtung vorderen bzw. hinteren Ende der in der Unterfolie ausgebildeten Vertiefung und/oder von einer an der Oberfolie aufgebrachten Bedruckung.

Die Steuereinrichtung ist erfindungsgemäß dazu konfiguriert, einen Verpackungsfehler anhand der Relativlage wenigstens zweier Merkmale der Verpackung zu erkennen, wenn ein gemessener Ist-Wert der Relativlage von einem Soll-Wert der Relativlage abweicht. Die Relativlage kann sich auf die Transportrichtung und/oder auf die senkrecht zur Transportrichtung verlaufende Querrichtung beziehen. Insbesondere wird der Ist-Wert der Relativlage der beiden Merkmale aus einem gemessenen Ist-Wert des einen Merkmals und einem gemessenen Ist-Wert des anderen Merkmals bestimmt.

Dabei kann eines der Merkmale ein Merkmal der Unterfolie und ein weiteres der Merkmale ein Merkmal der Oberfolie sein.

Die wenigstens zwei Merkmale sind aus einer die folgenden Merkmale umfassenden Gruppe ausgewählt:
- Vertiefung der Unterfolie,
- mittels einer Siegelstation zum Verschließen der Vertiefungen hergestellte Siegelstelle zwischen Unterfolie und Oberfolie;
- Bedruckung der Unterfolie, der Oberfolie und/oder der Verpackung;
- Etikett auf der Unterfolie, der Oberfolie und/oder der Verpackung;
- Markierung auf der Unterfolie, der Oberfolie und/oder der Verpackung;
- Trennstelle der Unterfolie, der Oberfolie und/oder der Verpackung.

Ferner ist vorgesehen, dass eine Bearbeitungsposition zumindest einer Arbeitsstation und/oder wenigstens eines Arbeitswerkzeuges zumindest einer Arbeitsstation in Transportrichtung und/oder senkrecht zur Transportrichtung verstellbar ist.

Ferner kann vorgesehen sein, dass eine Bearbeitungsposition zumindest einer Arbeitsstation und/oder wenigstens eines Arbeitswerkzeuges zumindest einer Arbeitsstation relativ zu einem Maschinengestell und/oder relativ zu der Transporteinrichtung für die Unterfolie verstellbar ist.

Die Steuereinrichtung ist zudem dazu konfiguriert, bei der Regelung eine Information zur Verstellung zu erzeugen, die repräsentiert, wie die Bearbeitungsposition zu verstellen ist.

Bei der Information zur Verstellung kann es sich insbesondere um ein Stellsignal handeln, welches die Steuereinrichtung im Rahmen der Regelung an eine zu verstellende Einrichtung übermittelt, beispielsweise einen Stellantrieb, mittels welchem eine Arbeitsstation oder ein Arbeitswerkzeug einer Arbeitsstation relativ zu einem Maschinengestell der Verpackungsmaschine bewegt wird. Alternativ kann es sich bei der Information zur Verstellung um eine Information handeln, die sich an einen Bediener richtet und z.B. in einer für den Bediener lesbaren Weise ausgegeben oder dargestellt wird. Die Information kann zum Beispiel Vorgaben für Einstellwerte umfassen, auf deren Basis der Bediener Veränderungen an den Einstellungen einer Arbeitsstation oder eines Arbeitswerkzeugs einer Arbeitsstation vornehmen kann.

Eine solche Information kann erfindungsgemäß auf unterschiedliche Weise genutzt werden.

Die Arbeitsstation und/oder das Arbeitswerkzeug weisen bzw. weist erfindungsgemäß einen steuerbaren Stellantrieb auf, wobei die Steuereinrichtung dazu konfiguriert ist, die Arbeitsstation und/oder das Arbeitswerkzeug in Abhängigkeit von der Information zur Verstellung automatisch mittels des Stellantriebs zu verstellen.

Gemäß einer anderen Variante kann die Steuereinrichtung dazu konfiguriert sein, die Information zur Verstellung auszugeben. Die Information kann z.B. dadurch genutzt werden, dass eine Bedieneinheit vorgesehen ist, mittels welcher ein Bediener die Arbeitsstation und/oder das Arbeitswerkzeug in Abhängigkeit von der Information zur Verstellung verstellen kann. Dies ist jedoch nicht zwingend. Es kann alternativ vorgesehen sein, dass der Bediener die ausgegebene, beispielsweise auf einem Monitor dargestellte, Information abliest und anhand dieser Information die Verstellung selbst vornimmt, beispielsweise durch manuelles Verstellen der betreffenden Arbeitsstation oder des betreffenden Arbeitswerkzeuges oder durch Eingeben von entsprechenden Stellwerten an der Steuereinheit oder an einer anderen, z.B. lediglich der jeweils zu verstellenden Arbeitsstation zugeordneten Steuereinrichtung.

Des Weiteren kann vorgesehen sein, dass die Steuereinrichtung dazu konfiguriert ist, zur Minimierung von Verstellwegen mehr als eine Arbeitsstation und/oder mehr als ein Arbeitswerkzeug zu verstellen.

Gemäß einem Ausführungsbeispiel umfasst die Verpackungsmaschine zumindest die folgenden Arbeitsstationen:
- eine Formstation, insbesondere eine auch als Tiefzieher oder Thermoformer bezeichnete Tiefziehstation, zum Erzeugen der Vertiefungen in der Unterfolie,
- eine Einbringstation zum Einbringen der Produkte in die Vertiefungen der Unterfolie,
- eine Zufuhrstation zum Aufbringen der Oberfolie auf die Unterfolie,
- eine Siegelstation zum Verschließen der Vertiefungen der Unterfolie durch Verbinden von Unterfolie und Oberfolie, und
- zumindest eine Trennstation zum Trennen und/oder Vereinzeln der noch durch die Unterfolie und Oberfolie zusammenhängenden Verpackungen.

Die Einbringstation kann ein oder mehrere Fördereinrichtungen umfassen, beispielsweise Förderbänder, und z.B. als sogenannter, dem Fachmann bekannter Einleger ausgebildet sein. Alternativ oder zusätzlich kann die Einbringstation einen oder mehrere Roboter umfassen, insbesondere Delta-Roboter oder Pick-and-Place- oder Picker-Roboter (sogenannte "Picker").

Des Weiteren kann die Verpackungsmaschine zusätzlich wenigstens eine Etikettierstation zum Aufbringen von Etiketten auf die Unterfolie und/oder auf die Oberfolie aufweisen.

Allgemein kann vorgesehen sein, dass die fertig hergestellten Verpackungen nach dem Vereinzeln vermessen werden. Hierdurch können auch solche Verpackungsfehler erfasst werden, die erst an einer die Verpackungen voneinander trennenden Trennstation entstehen.

Allgemein kann vorgesehen sein, dass ausschließlich fertig hergestellte Verpackungen vermessen werden, und zwar entweder vor dem Vereinzeln oder nach dem Vereinzeln. Hierdurch erfolgt ausschließlich eine so genannte End-of-line-Kontrolle der fertig hergestellten Verpackungen. In Abhängigkeit von den jeweiligen Gegebenheiten kann folglich eine einzige Kontrollstelle, an der eine oder mehrere Messeinrichtungen angeordnet sind, ausreichen, um einen oder mehrere Verpackungsfehler zu erkennen und eine oder mehrere Arbeitsstationen so zu regeln, dass der oder jeder Verpackungsfehler reduziert oder beseitigt wird.

Verpackungen, an denen ein Verpackungsfehler erkannt wurde, können beispielsweise aussortiert werden. Hierbei dient das erfindungsgemäße Verfahren nicht nur dazu, den Maschinenbetrieb mit dem Ziel einer Beseitigung oder zumindest Reduzierung von Verpackungsfehlern zu optimieren, sondern kann auch dazu genutzt werden, nachfolgende Prozesse zu vereinfachen, indem nicht verwertbare Verpackungen erkannt und ausgesondert werden. Dabei kann erfindungsgemäß auch eine Klassierung von mit Fehlern behafteten Verpackungen erfolgen, beispielsweise im Sinne einer Qualitätskontrolle dahingehend, dass zwischen (i) fehlerfreien und somit hochwertigen Verpackungen, (ii) kleine Fehler aufweisenden und somit zwar minderwertigen, aber immer noch verkäuflichen Verpackungen, und (iii) aufgrund zu großer Fehler unverkäuflichen Verpackungen unterschieden wird. Auf eine zusätzliche Qualitätskontrolle kann somit verzichtet werden.

Bei der erfindungsgemäßen Regelung kann die Beeinflussung des Betriebs einer oder mehrerer Arbeitsstationen im laufenden Betrieb der Verpackungsmaschine erfolgen. Dies ist jedoch nicht zwingend. Alternativ kann nach dem Erkennen eines Verpackungsfehlers die Verpackungsmaschine vorübergehend angehalten werden, um an der zumindest einen Arbeitsstation, an welcher der Verpackungsfehler entstanden ist, eine Korrekturmaßnahme durchzuführen. Auch eine solche Vorgehensweise ist hier unter dem Begriff der Regelung zu verstehen. Dabei sind unter dem Begriff der Regelung auch Maßnahmen mit manuellen Eingriffen durch einen Bediener zu verstehen, beispielsweise durch den Bediener erfolgende Freigaben von Verstellungen an der jeweiligen Arbeitsstation.

Gemäß einer bevorzugten Vorgehensweise wird nach dem Erkennen eines Verpackungsfehlers an einer fertig hergestellten Verpackung oder an einer im Entstehen befindlichen Verpackung eine Rückverfolgung dieser Verpackung durchgeführt, um festzustellen, an welcher oder welchen der Arbeitsstationen der Verpackungsfehler entstanden ist. Dies kann insbesondere mittels der Steuereinrichtung durch eine Analyse der Verpackungsfehler in Kenntnis der an den einzelnen Arbeitsstationen ablaufenden Arbeitsvorgänge erfolgen. Eine hierbei eingesetzte Software der Steuereinrichtung kann z.B. aus Verpackungsfehlern, deren Ursache bekannt ist, lernen, d.h. es können hierbei KI-Methoden zum Einsatz kommen (KI = Künstliche Intelligenz). Die Software kann beispielsweise vorher eingelernt werden, indem ihr gezielt mit bestimmten Fehlern versehene Verpackungen präsentiert werden.

Gemäß einer möglichen erfindungsgemäßen Vorgehensweise wird der Betrieb nur an derjenigen Arbeitsstation geregelt, nach welcher die Verpackungen vermessen werden. Dies kann also (wobei dies aber nicht zwingend ist) unter der Annahme erfolgen, dass der Verpackungsfehler gerade von dieser Arbeitsstation verursacht wurde. Alternativ kann der Betrieb an mehreren Arbeitsstationen in Abhängigkeit von einer Analyse des Verpackungsfehlers geregelt wird. Hierbei kann, wie vorstehend bereits erwähnt, eine während des Betriebs lernende und/oder zuvor eingelernte Software der Steuereinrichtung zum Einsatz kommen.

Dabei kann insbesondere vorgesehen sein, dass die Analyse des Verpackungsfehlers umfasst, dass ermittelt wird, welche Arbeitsstation in welcher Weise zu dem Verpackungsfehler beigetragen hat. Auf dieser Basis kann dann gezielt der Betrieb der betroffenen Arbeitsstationen beeinflusst werden.

Gemäß einer Ausführungsform der Erfindung wird der Betrieb an mehreren Arbeitsstationen derart geregelt wird, dass Verstellwege an den Arbeitsstationen minimiert werden. Die Minimierung von Verstellwegen ermöglicht eine besonders schnelle Optimierung des Maschinenbetriebs. Die Minimierung kann, muss aber nicht die einzige oder maßgebliche Zielsetzung im Rahmen der Regelung sein. Das Ziel einer Minimierung von Verstellwegen kann innerhalb eines jeweiligen Gesamtkonzeptes mit einer fest vorgegebenen oder auch variablen Gewichtung bei der Regelung berücksichtigt werden.

Bei dem erfindungsgemäßen Verfahren umfasst die Regelung, dass die Bearbeitungsposition zumindest einer Arbeitsstation und/oder die Bearbeitungsposition wenigstens eines Arbeitswerkzeugs einer Arbeitsstation verstellt wird. Es ist folglich möglich, aber nicht zwingend, dass eine Arbeitsstation als Ganzes in oder quer zur Transportrichtung verstellt wird. Es kann genügen, nur ein oder mehrere Arbeitswerkzeuge der betreffenden Arbeitsstation zu verstellen. Bei einer Trennstation kann es z.B. genügen, nur eines der Stanzwerkzeuge zu verstellen. Bei einer Tiefzieh- oder Siegelstation kann es genügen, nur das Oberwerkzeug und das Unterwerkzeug zu verstellen, ohne die gesamte Tiefzieh- bzw. Siegelstation bewegen zu müssen. Es kann auch genügen, nur das Oberwerkzeug oder nur das Unterwerkzeug zu verstellen.

Die Regelung des Betriebs einer Arbeitsstation ist nicht auf eine Positionsverstellung, also auf ein Verstellen im Sinne eines Bewegens der Arbeitsstation oder eines Arbeitswerkzeuges der Arbeitsstation zum Zwecke des Veränderns einer Position der Arbeitsstation bzw. des Arbeitswerkzeuges, beschränkt. Alternativ oder zusätzlich kann im Rahmen der Regelung zumindest ein Betriebsparameter geändert werden. Bei dem Betriebsparameter kann es sich z.B. um die Länge eines Hubweges der gesamten Arbeitsstation oder eines Arbeitswerkzeugs der Arbeitstation, z.B. eines Oberwerkzeugs oder Unterwerkzeugs einer Formstation, einer Siegelstation oder einer Trennstation, handeln. Ferner kann der Betriebsparameter die Heizzeit oder die Arbeitstemperatur der Siegelstation oder einer anderen Arbeitsstation sein.

Des Weiteren kann bei dem Verfahren vorgesehen sein, dass zum Erkennen eines Verpackungsfehlers ein aufgenommenes Ist-Bild der Verpackung mit einem Referenz-Bild verglichen wird.

Zum Erkennen eines Verpackungsfehlers wird ein gemessener Ist-Wert der Relativlage wenigstens zweier Merkmale der Verpackung mit einem Referenz-Wert verglichen. Dabei kann zum Beispiel der Ist-Wert der Relativlage der beiden Merkmale aus einem gemessenen Ist-Wert des einen Merkmals und einem gemessenen Ist-Wert des anderen Merkmals bestimmt werden.

Hierbei kann als eines der Merkmale ein Merkmal der Unterfolie und als ein weiteres der Merkmale ein Merkmal der Oberfolie verwendet werden.

Als zumindest eines der Merkmale kann auch ein gemeinsames Merkmal von Unterfolie und Oberfolie verwendet werden, beispielsweise der Verpackungsrand, der Verlauf einer Siegelnaht oder die Position einer Bedruckung.

Die Merkmale werden aus einer die folgenden Merkmale umfassenden Gruppe ausgewählt:
- Vertiefung der Unterfolie;
- mittels einer Siegelstation zum Verschließen der Vertiefungen hergestellte Siegelstelle zwischen Unterfolie und Oberfolie;
- Bedruckung der Unterfolie, der Oberfolie und/oder der Verpackung;
- Etikett auf der Unterfolie, der Oberfolie und/oder der Verpackung;
- Markierung auf der Unterfolie, der Oberfolie und/oder der Verpackung;
- Trennstelle der Unterfolie, der Oberfolie und/oder der Verpackung.

Gemäß einem weiteren Ausführungsbeispiel der Erfindung wird für den Verpackungsfehler eine Trendüberwachung durchgeführt und in den Betrieb zumindest einer der Arbeitsstationen erst dann eingegriffen, wenn der Verpackungsfehler zumindest einen vorgegebenen oder vorgebbaren Schwellwert überschreitet oder unterschreitet.

Dabei kann der Schwellwert einen absoluten, relativen oder statistischen Grenzwert für den Verpackungsfehler oder für eine Änderungsrate des Verpackungsfehlers pro Zeiteinheit oder pro Anzahl vermessener Verpackungen repräsentieren.

Des Weiteren kann der Schwellwert innerhalb eines Toleranzbandes liegen oder ein Toleranzband nach oben oder nach unten begrenzen, wobei der Eingriff in den Betrieb der Arbeitsstation erst dann erfolgt, wenn der Fehlerwert außerhalb des Toleranzbandes liegt.

Gemäß einem weiteren Ausführungsbeispiel kann vorgesehen sein, dass die Regelung in Abhängigkeit von zumindest einem Verpackungsparameter erfolgt. Der Verpackungsparameter kann aus einer die folgenden Verpackungsparameter umfassenden Gruppe ausgewählt werden: Qualität, Stärke, Typ oder Material der Unterfolie oder der Oberfolie; Form, Breite, Höhe oder Tiefe der Vertiefungen.

Alternativ oder zusätzlich kann vorgesehen sein, dass die Regelung in Abhängigkeit von zumindest einem Betriebsparameter der Verpackungsmaschine erfolgt. Der Betriebsparameter kann beispielsweise aus einer die folgenden Betriebsparameter umfassenden Gruppe ausgewählt werden: Transportgeschwindigkeit der Unterfolie entlang der Maschine; Anzahl von Vertiefungen pro Längeneinheit in Transportrichtung; Gesamtbetriebsstunden der Transporteinrichtung; Qualität der Transportketten; Einsatzdauer der Transportketten; Betriebstemperatur der Verpackungsmaschine oder einer Komponente der Verpackungsmaschine.

Generell kann der Betriebsparameter also einen Parameter des eigentlichen Maschinenbetriebs, aber auch einen anderen Parameter betreffen, z.B. einen Parameter der verwendeten Unterfolie oder Oberfolie.

Alternativ oder zusätzlich kann die Regelung in Abhängigkeit von zumindest einem Zustands- oder Umgebungsparameter erfolgen. Dabei kann der Zustands- oder Umgebungsparameter aus einer die folgenden Zustands- oder Umgebungsparameter umfassenden Gruppe ausgewählt werden: Umgebungstemperatur; Luftfeuchtigkeit der Umgebung.

Die erfindungsgemäße Regelung kann ausschließlich auf den mittels der Messeinrichtung erfassten Daten beruhen. Dies ist jedoch nicht zwingend. Alternativ können in die Regelung die Daten von einer oder mehreren weiteren Mess-, Kontroll- oder Überwachungseinrichtungen der Verpackungsmaschine einbezogen werden. Eine solche Einrichtung kann beispielsweise einer Einbringstation zum Einbringen der Produkte in die Vertiefungen der Unterfolie zugeordnet sein.

Der Zeitpunkt der Regelung kann erfindungsgemäß grundsätzlich beliebig gewählt werden, insbesondere in Abhängigkeit von der Art oder von der Größe eines erkannten Verpackungsfehlers oder von der Art, wie eine jeweilige Arbeitsstation im Rahmen der Regelung beeinflusst wird.

So kann beispielsweise die Regelung während des Betriebs der Verpackungsmaschine oder der jeweiligen Arbeitsstation erfolgen. Alternativ oder zusätzlich kann die Regelung vor, während oder nach einem in einem jeweiligen Arbeitstakt erfolgenden Vorziehen der Unterfolie erfolgen. Ferner kann alternativ oder zusätzlich vorgesehen sein, dass die Regelung vor, während oder nach einer Betriebsunterbrechung erfolgt. Eine Betriebsunterbrechung kann beispielsweise durch eine Arbeitspause, z.B. eine Pause des Arbeitspersonals, durch einen Rollenwechsel, insbesondere einen Wechsel einer Folienrolle, durch einen Chargenwechsel, insbesondere eine Wechsel der Art der zu verpackenden Produkte oder einen Wechsel eines Formatsatzes, oder durch eine Verzögerung in der Zufuhr von zu verpackenden Produkten bedingt sein.

Die Erfindung wird im Folgenden beispielhaft unter Bezugnahme auf die Zeichnung beschrieben. Es zeigen:
- Fig. 1: schematisch in einer Seitenansicht eine erfindungsgemäße Verpackungsmaschine,
- Fig. 2 bis 4: schematische Darstellungen zur Veranschaulichung von möglichen Verpackungsfehlern, die erfindungsgemäß erkannt werden können,
- Fig. 5 bis 7: schematische Darstellungen zur Veranschaulichung von möglichen erfindungsgemäßen Anordnungen von Messeinrichtungen zum Erkennen von Verpackungsfehlern.

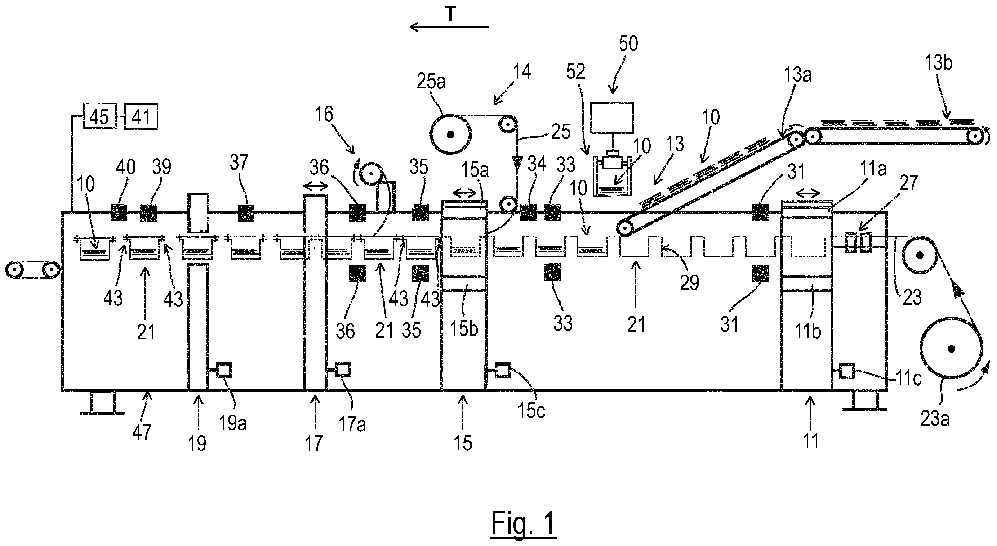

Die in Fig. 1 dargestellte, in einer Transportrichtung T arbeitende Verpackungsmaschine umfasst ein Maschinengestell 47. An einem linken Seitenrahmen und an einem rechten Seitenrahmen des Maschinengestells 47 ist jeweils eine hier nur schematisch am stromaufwärts gelegenen Ende der Maschine dargestellte Transportkette 27 geführt. Die beiden Transportketten 27 bilden gemeinsam eine Transporteinrichtung für eine von einer Vorratsrolle 23a abgezogene Unterfolie 23.

Die Maschine umfasst eine Mehrzahl von in Transportrichtung T aufeinander folgenden Arbeitsstationen, nämlich eine auch als Tiefzieher oder Thermoformer bezeichnete Formstation 11, eine Einbringstation 13 für zu verpackende Produkte 10, eine Zufuhrstation 14 für eine von einer Vorratsrolle 25a abgezogene Oberfolie 25, eine Etikettierstation 16, eine Quertrennstation 17 sowie eine Längstrennstation 19.

Bei den zu verpackenden Produkten 10 handelt es sich beispielsweise um Lebensmittelprodukte, hier in Form von sogenannten Portionen, die jeweils mehrere Scheiben umfassen, welche zuvor mittels eines Lebensmittelslicers (nicht dargestellt) von einem laib- oder riegelförmigen Lebensmittel wie z.B. Wurst, Käse, Schinken oder Fleisch abgetrennt wurden.

Den Betrieb der Verpackungsmaschine einschließlich der erwähnten Arbeitsstationen steuert eine zentrale Steuereinrichtung 41, die außerdem - wie vorstehend erwähnt - für die erfindungsgemäße Regelung zuständig ist, auf welche nachstehend näher eingegangen wird. Zudem ist die Verpackungsmaschine mit einer Bedieneinrichtung 45 versehen, die z.B. einen Touchscreen umfasst, an welchem einem Bediener alle erforderlichen Informationen angezeigt werden können und der Bediener alle notwendigen Einstellungen vor und während des Betriebs der Maschine vornehmen kann.

Aufbau und Funktionsweise der genannten Arbeitsstationen sind dem Fachmann grundsätzlich bekannt, sodass hierauf nicht im Detail eingegangen wird.

An der ein Oberwerkzeug 11a und ein Unterwerkzeug 11b umfassende Formstation 11 werden jeweils in einem Tiefziehprozess in der Unterfolie 23 auch als Mulden bezeichnete Vertiefungen 29 ausgebildet. In diese Vertiefungen 29 werden an der Einbringstation 13 die erwähnten Portionen 10 eingelegt. Die Einbringstation 13 umfasst hier einen sogenannten Einleger, von dem zwei Endlosförderbänder 13a, 13b dargestellt sind. Alternativ oder zusätzlich kann die Einbringstation 13 einen hier ebenfalls schematisch dargestellten Roboter 50 umfassen, z.B. in Form eines sogenannten "Picker", der als Delta-Roboter mit einem Greifer 49, der zwei jeweils eine Portion 10 gemeinsam haltende Schaufeln umfasst, ausgebildet sein kann. Derartige Roboter und deren Einsatz bei der Handhabung von Lebensmitteln, insbesondere beim Einlegen von Portionen in Vertiefungen von Verpackungen, sind dem Fachmann grundsätzlich bekannt, weshalb hier weitergehende Ausführungen nicht erforderlich sind.

Anschließend werden die mit den gefüllten Vertiefungen 29 versehene Unterfolie 23 und die Oberfolie 25 der Siegelstation 15 zugeführt, die ein Oberwerkzeug 15a und ein Unterwerkzeug 15b umfasst. Mittels dieser Werkzeuge 15a, 15b werden die Oberfolie 25 und die Unterfolie 23 miteinander verbunden. Hierdurch werden die Vertiefungen 29 und somit die von Oberfolie 25 und Unterfolie 23 gebildeten Verpackungen 21 verschlossen. In Fig. 1 sind quer zur Transportrichtung T verlaufende, auch als Siegelnähte bezeichnete Siegelstellen 43 schematisch angedeutet.

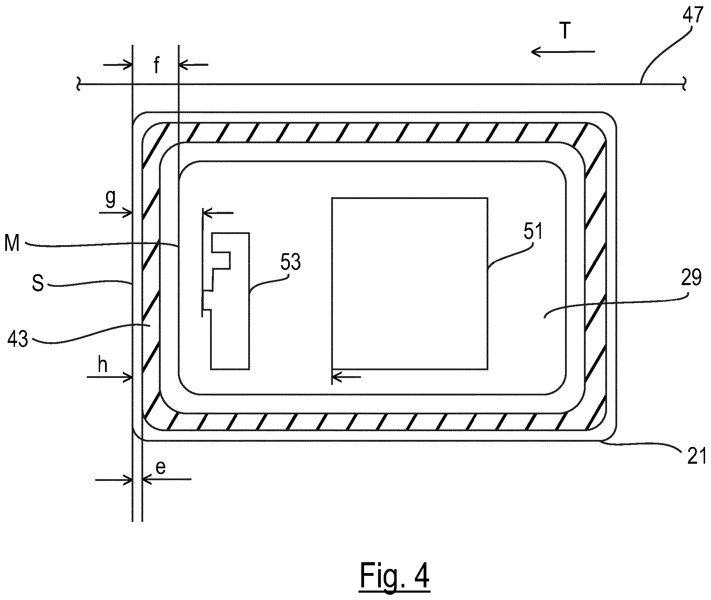

Im Anschluss an die Siegelstation 15 hängen die Verpackungen 21 noch durch die Oberfolie 25 und die Unterfolie 23 zusammen, müssen also noch vereinzelt werden. In dem hier dargestellten Ausführungsbeispiel werden die Verpackungen 21 vor dem Vereinzeln an der Etikettierstation 16 mit Etiketten 51 (vgl. z.B. Fig. 4) versehen. Alternativ können eine oder mehrere Etikettierstationen 16 stromabwärts der Trennstationen 17, 19 positioniert sein. Des Weiterern können eine oder mehrere Arbeitsstationen vorgesehen sein, an denen die Verpackungen 21 mit einer oder mehreren Bedruckungen 53 (vgl. z.B. Fig. 4) versehen werden.

Stromabwärts der Trennstationen 17, 19 können weitere Arbeitsstationen vorgesehen sein, beispielsweise eine Waage zur Gewichtskontrolle der Verpackungen 21.

Fig. 1 zeigt eine Vielzahl von Stellen, an denen die Verpackungsmaschine mit hier nur schematisch dargestellten Messeinrichtungen 31, 33, 34, 35, 36, 37, 39 und 40 versehen sein kann.

So kann eine obere und eine untere Messeinrichtung 31 jeweils unmittelbar hinter der Formstation 11 vorgesehen sein. Jeweils im Anschluss an die Einbringstation 13 kann ebenfalls eine obere und eine untere Messeinrichtung 33 angeordnet sein.

Eine weitere Messeinrichtung 34 kann der Zufuhrstation 14 für die Oberfolie 25 zugeordnet sein.

Unmittelbar hinter der Siegelstation 15 ist wiederum jeweils eine obere und eine untere Messeinrichtung 35 angeordnet. Ebenso schließen sich jeweils eine obere und eine untere Messeinrichtung 36 an die Etikettierstation 16 an.

Des Weiteren ist eine Messeinrichtung 37 stromabwärts der Quertrennstation 17 und eine weitere Messeinrichtung 39 stromabwärts der Längstrennstation 19 angeordnet.

Eine in Transportrichtung T letzte Messeinrichtung 40 ist keiner der genannten Arbeitsstationen zugeordnet, sondern zusätzlich vorgesehen, um eine von der jeweiligen Anwendung abhängige Vermessung der fertigen Verpackungen 21 durchzuführen.

Abweichend von der Darstellung in Fig. 1 kann eine erfindungsgemäße Verpackungsmaschine eine kleinere oder eine größere Anzahl von Messeinrichtungen aufweisen. Insbesondere kann vorgesehen sein, dass nicht hinter jeder Arbeitsstation, sondern nur hinter einigen der Arbeitsstationen jeweils eine oder mehrere Messeinrichtungen vorhanden sind. Des Weiteren ist es möglich, dass in Abhängigkeit von einer jeweiligen Anwendung nur ein Teil der an einer Verpackungsmaschine angebrachten Messeinrichtungen aktiv ist, während die übrigen Messeinrichtungen für die momentane Anwendung nicht verwendet werden.

Anwendungen können sich z.B. hinsichtlich der Art der zu verpackenden Produkte 10, der Größe der Vertiefungen 29 in Längs- und/oder Querrichtung oder hinsichtlich eines Formatsatzes voneinander unterscheiden. Ein Formatsatz bezeichnet hier allgemein eine Gruppe von Items, hier insbesondere sowohl von Portionen 10 als auch Vertiefungen 29 oder Verpackungen 21, die als Ganzes - also formatsatzweise - gehandhabt werden und sich insbesondere durch Anzahl und Abstand von Items in Längs- und Querrichtung voneinander unterscheiden.

So kann z.B. pro Arbeitstakt der Verpackungsmaschine ein Formatsatz von 3 x 4 (3 in Querrichtung und 4 in Längsrichtung) Vertiefungen 29 in der Formstation 11 gebildet werden, an der Einbringstation 13 ein Formatsatz von 3 x 4 entsprechend angeordneten Produkten 10 in einen jeweiligen Formatsatz von Vertiefungen 21 eingebracht werden, und an der Siegelstation 15 ein jeweiliger Formatsatz von 3 x 4 mit Produkten 10 gefüllten Vertiefungen 29 verschlossen werden.

Der Betrieb der Verpackungsmaschine hinsichtlich Erfassung, Analyse und Beseitigung bzw. Reduzierung von Verpackungsfehlern kann grundsätzlich nach unterschiedlichen Konzepten erfolgen.

Gemäß einem Konzept werden nur fertige Verpackungen 21 vermessen, beispielsweise durch die in Transportrichtung T letzte Messeinrichtung 40. Hierdurch kann der Umstand berücksichtigt werden, dass als Verursacher für einen oder mehrere Verpackungsfehler grundsätzlich jede der einzelnen Arbeitsstationen infrage kommt.

Gemäß einem anderen Konzept erfolgt eine Vermessung der im Entstehen befindlichen Verpackungen 21 unmittelbar im Anschluss an jede der Arbeitsstationen. Dieses Konzept kann auch nur mit einer Auswahl von Arbeitsstationen durchgeführt werden, d.h. es ist bei diesem Konzept nicht zwingend, dass eine Vermessung der Verpackungen 21 nach jeder Arbeitsstation erfolgt.

Die Messergebnisse der Messeinrichtung oder Messeinrichtungen werden der Steuereinrichtung 41 zugeführt.

Nach Analyse der Messergebnisse kann gemäß einem möglichen Konzept automatisch in den Betrieb einer oder mehrerer Arbeitsstationen eingegriffen werden, um dem Entstehen des oder der Verpackungsfehler entgegenzuwirken. Gemäß einem alternativen Konzept kann die Steuereinrichtung 41, beispielsweise an der Bedieneinrichtung 45, Informationen darstellen, anhand welcher ein Bediener selbst in den Betrieb einer oder mehrerer jeweiliger Arbeitsstationen eingreifen kann.

Der Eingriff in den Betrieb einer Arbeitsstation, d.h. die Regelung des Betriebs einer Arbeitsstation, kann insbesondere eine Veränderung der Position der Arbeitsstation bzw. eines Arbeitswerkzeuges der Arbeitsstation beinhalten, beispielsweise eine Positionsänderung in Transportrichtung T. Dies ist in Fig. 1 beispielhaft bei der Formstation 11, der Siegelstation 15 und der Quertrennstation 19 jeweils durch einen Doppelpfeil angedeutet.

Die Arbeitsstationen können für eine derartige Positionsänderung mit einem Stellantrieb 11c, 15c, 17a bzw. 19a versehen sein. Dieser Stellantrieb kann von der Steuereinrichtung 41 automatisch steuerbar oder von einem Bediener manuell betätigbar oder ansteuerbar sein.

Hinsichtlich möglicher konkreter Ausgestaltungen der Messeinrichtungen, der Art der im Betrieb der Verpackungsmaschine entstehenden und mittels der Messeinrichtungen erfassbaren Verpackungsfehler sowie konkreter Maßnahmen zur Beseitigung von erkannten Verpackungsfehlern wird auch auf den Einleitungsteil sowie auf die nachstehenden Ausführungen verwiesen.

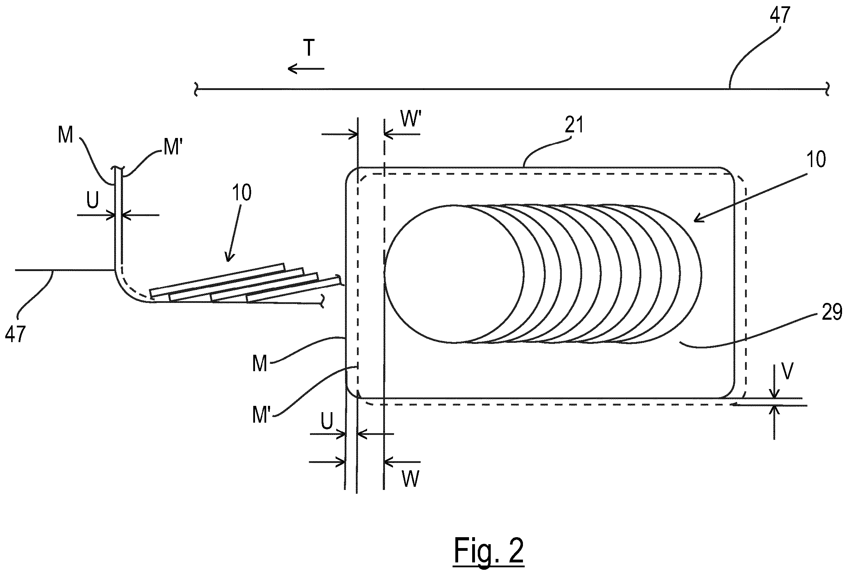

Anhand der schematischen Darstellungen in den Fig. 2 bis 7 soll im Folgenden rein beispielhaft erläutert werden, um welche Verpackungsfehler, die erfindungsgemäß erkannt werden, es sich beispielsweise handeln kann, und wie die für die Erkennung der Verpackungsfehler vorgesehenen Messeinrichtungen ausgebildet und angeordnet sein können.

In Fig. 2 ist beispielhaft von einer Verpackung 21, die in Transportrichtung T relativ zum Maschinengestell 47 bewegt wird, zur Vereinfachung lediglich die auch als Mulde bezeichnete Vertiefung 29 dargestellt, in der sich eine zu verpackende Portion 10 befindet. Die Darstellung ist eine Draufsicht, wobei die kleinere Darstellung links in Fig. 2 eine Seitenansicht ist.

Für die Verpackung 21 und somit für die umlaufende, die Mulde 29 begrenzende Muldenkante M ist bezüglich des Maschinengestells 47 sowohl in Transportrichtung T als auch quer zur Transportrichtung T eine in Fig. 2 gestrichelt dargestellte Solllage M' vorgegeben. Diese Solllage der Verpackungen 21 wird von den stromabwärts angeordneten Arbeitsstationen erwartet, damit diese ordnungsgemäß arbeiten können. Bei den stromabwärts angeordneten Arbeitsstationen handelt es sich hierbei insbesondere um die Siegelstation 15 sowie um die zur Vereinzelung der Verpackungen 21 dienenden Trennstationen 17, 19 (vgl. Fig. 1).

Die Lage der Muldenkante M ist in dem hier dargestellten Beispiel gegenüber der Solllage M' verschoben, und zwar um eine Weglänge U in Transportrichtung T und um eine Weglänge V quer zur Transportrichtung T. Das in Transportrichtung T vordere Ende der Portion 10 befindet sich folglich in einem Abstand W von der in Transportrichtung T vorne liegenden Muldenkante M und in einem Abstand W' von der entsprechenden Solllage der Muldenkante M'.

Der Verpackungsfehler besteht in diesem Beispiel also in einer Fehlpositionierung der Mulde 29 sowohl in Transportrichtung T als auch quer zur Transportrichtung T. Korrigiert werden kann diese Fehlpositionierung durch eine entsprechende Positionskorrektur der stromaufwärts gelegenen Formstation 11 (vgl. Fig. 1) bzw. der Werkzeuge 11a, 11b der Formstation 11, indem mittels der Steuereinrichtung 41 der Stellantrieb 11c der Formstation 11 im Rahmen der erfindungsgemäßen Regelung entsprechend angesteuert wird.

Ein weiterer Verpackungsfehler kann darin bestehen, dass die Position der Portion 10 innerhalb der Mulde 29 nicht einer jeweiligen Vorgabe entspricht. Das in Transportrichtung T vordere Ende der Portion 10 kann folglich zu nahe an der vorderen Muldenkante M oder zu weit von dieser vorderen Muldenkante M entfernt liegen. Der in Fig. 2 dargestellte Abstand W kann folglich zu klein oder zu groß sein. Wenn davon ausgegangen wird, dass die Positionen der Verpackungen 21 bzw. der Vertiefungen 29 bezüglich des Maschinengestells 47 den Vorgaben entsprechen, also nicht fehlerhaft sind, kann dieser Verpackungsfehler durch eine entsprechende Korrektur an der Einbringstation 13 korrigiert werden.

Die stromabwärts der Einbringstation 13 angeordneten Messeinrichtungen 33 (vgl. Fig. 1) sind dazu ausgebildet, die Abstände U und V bzw. den Abstand W zu messen, um im Rahmen der erfindungsgemäßen Regelung einen Ist-Wert zu erfassen. Die Abstände U, V können bestimmt werden, wenn die Messeinrichtungen 33 bezüglich des Maschinengestells 47 feststehend angeordnet sind, so dass der Steuereinrichtung 41 die Positionen der Messeinrichtungen 33 relativ zum Maschinengestell 47 als Referenz- oder Bezugspositionen bekannt sind.

Folglich können die Messeinrichtungen 33 die Lage des jeweils in Transportrichtung T vorderen Endes der Portion 10 auch bezüglich des Maschinengestells 47 bestimmen, also durch eine Absolutmessung innerhalb der Verpackungsmaschine. Alternativ kann eine Relativmessung bezogen auf die in Transportrichtung T vordere Muldenkante M erfolgen.

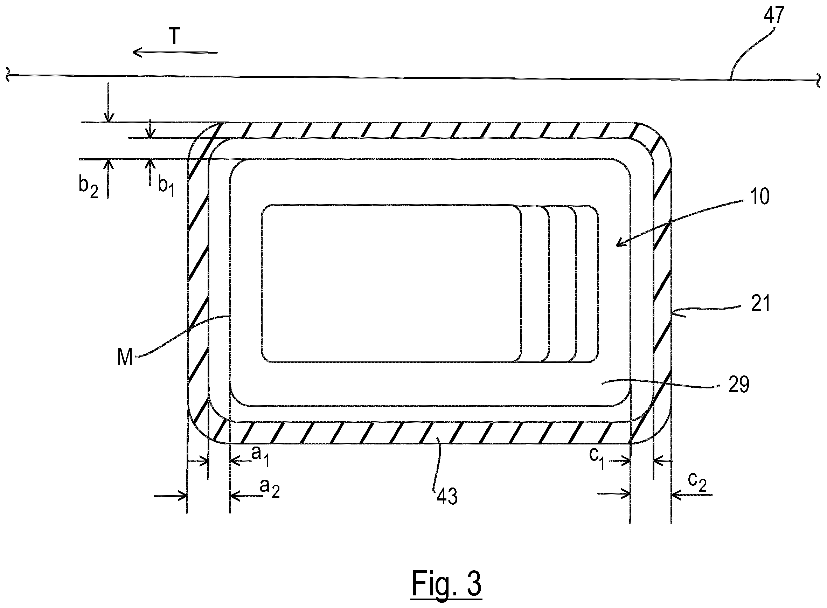

Gemäß Fig. 3 kann ein Verpackungsfehler darin bestehen, dass die umlaufende, auch als Siegelnaht bezeichnete Siegelstelle 43 abweichend von einer jeweiligen Vorgabe nicht den korrekten Abstand zur Verpackungsmulde M aufweist.

Die stromabwärts der Siegelstation 15 angeordneten Messeinrichtungen 35 (vgl. Fig. 1) können beispielsweise - jeweils bezogen auf die Transportrichtung T - die in Fig. 3 eingezeichneten Abstände b1 und b2 am rechten Verpackungsrand, die Abstände a1 und a2 am vorderen Verpackungsrand und die Abstände c1 und c2 am hinteren Verpackungsrand messen. Dabei beziehen sich die Wegstrecken b1, a1 und c1 jeweils auf den Abstand zwischen dem inneren Rand der Siegelnaht 43 und der Mulde M, wohin gegen die Abstände b2, a2 und c2 jeweils den Abstand zwischen der Muldenkante M und dem äußeren Rand der Siegelnaht 43 bezeichnen.

Wenn festgestellt wird, dass diese Weglängen nicht den jeweiligen Vorgaben entsprechen, liegt ein Verpackungsfehler vor, der durch entsprechende Positionskorrekturen an der Siegelstation 15 beseitigt oder reduziert werden kann. Hierzu kann die Steuereinrichtung 41 im Rahmen der Regelung beispielsweise den Stellantrieb 15c der Siegelstation 15 ansteuern, um entweder die Siegelstation 15 als Ganzes oder deren Werkzeuge 15a, 15b relativ zum Maschinengestell 47 zu bewegen.

In Fig. 4 sind vier weitere Beispiele für erfindungsgemäß erkennbare und behebbare Verpackungsfehler schematisch dargestellt. Diese Verpackungsfehler können z.B. an den fertig hergestellten Verpackungen 21 beispielsweise mit der im Ausführungsbeispiel der Fig. 1 am weitesten stromabwärts gelegenen Messeinrichtung 40 erkannt werden.

Ein Verpackungsfehler betrifft den durch die Weglänge e bezeichneten Abstand zwischen der in Transportrichtung T vorderen, quer zur Transportrichtung T verlaufenden Schneidkante S und der Siegelnaht 43. Entspricht die Weglänge e nicht der jeweiligen Vorgabe, kann hierfür eine Fehlpositionierung der für die Querrichtung zuständigen Trennstation 17 oder eine Fehlpositionierung an der Siegelstation 15 verantwortlich sein. Hinsichtlich der Fehlerursache liegt folglich eine potentiell mehrdeutige Fehlersituation insofern vor, als ein erkannter Verpackungsfehler prinzipiell mehrere Ursachen haben kann.

Generell gilt für derartige potentiell mehrdeutige Fehlersituationen, dass erfindungsgemäß die Fehlerursache gleichwohl eindeutig identifiziert werden kann, und zwar beispielsweise dann, wenn der Steuereinrichtung 41 die korrekte Solllage des jeweiligen Merkmals (beispielsweise der Schneidkante S oder der Siegelnaht 43) bezogen auf das Maschinengestell 47 bekannt ist oder aufgrund weiterer Messeinrichtungen zusätzliche Informationen in die von der Steuereinrichtung 41 durchgeführte Auswertung der Messwerte mit einbezogen werden können.

Der Abstand f bezeichnet den wiederum in Transportrichtung T gemessenen Abstand zwischen der vorstehend erwähnten vorderen Schneidkante S und der vorderen Muldenkante M. Wenn z.B. aufgrund anderer der Steuereinrichtung 41 zur Verfügung stehender Informationen feststeht, dass die für die Querrichtung zuständige Trennstation 17 korrekt positioniert ist und ordnungsgemäß arbeitet, so dass von einer korrekten Lage der Schneidkante S ausgegangen werden kann, liegt die Ursache für eine Abweichung des gemessenen Abstandes f von einer jeweiligen Vorgabe folglich in einer Fehlpositionierung der Vertiefung 29. Dies kann im Rahmen der erfindungsgemäßen Regelung beispielsweise durch eine Positionskorrektur an der Formstation 11 behoben werden.

Die in Fig. 4 dargestellte Verpackung 21 ist auf der Oberfolie mit einer Bedruckung 53 und mit einem Etikett 51 versehen. Die hierfür verantwortlichen Arbeitsstationen (zur Aufbringung der Etiketten 51 dient die Etikettierstation 16 im Ausführungsbeispiel der Fig. 1) können für Fehlpositionierungen der Bedruckungen 53 bzw. Etiketten 51 verantwortlich sein. Erkannt werden kann dies erfindungsgemäß dadurch, dass die entsprechenden Abstände g (für eine Bedruckung 53) bzw. h (für ein Etikett 51) nicht den jeweiligen Vorgaben entsprechen. Diese Abstände sind in Fig. 4 bezüglich der in Transportrichtung T vorderen Schneidkante S dargestellt. Alternativ können die Positionen der Bedruckungen 53 und Etiketten 51 auch bezüglich der Siegelnaht 43 oder der Muldenkante M gemessen werden.

In den Figuren nicht dargestellt sind Markierungen, die an der Unterfolie 23 oder an der Oberfolie 25 (vgl. Fig. 1) vorgesehen sein können und die entweder bereits bei der Folienherstellung ausgebildet oder durch entsprechende Einrichtungen der Verpackungsmaschine selbst während des Betriebs in der jeweiligen Folie ausgebildet werden können. Die Verwendung von Folienmarkierungen an Verpackungsmaschinen an sich ist grundsätzlich bekannt, z.B. zur zeitlichen Synchronisation von Arbeitsstationen. Erfindungsgemäß können derartige Markierungen der Steuereinrichtung 41 zusätzliche Informationen liefern, um bei der im Rahmen der erfindungsgemäßen Regelung erfolgenden Auswertung von Messwerten die Ursachen von Verpackungsfehlern eindeutig zu identifizieren.

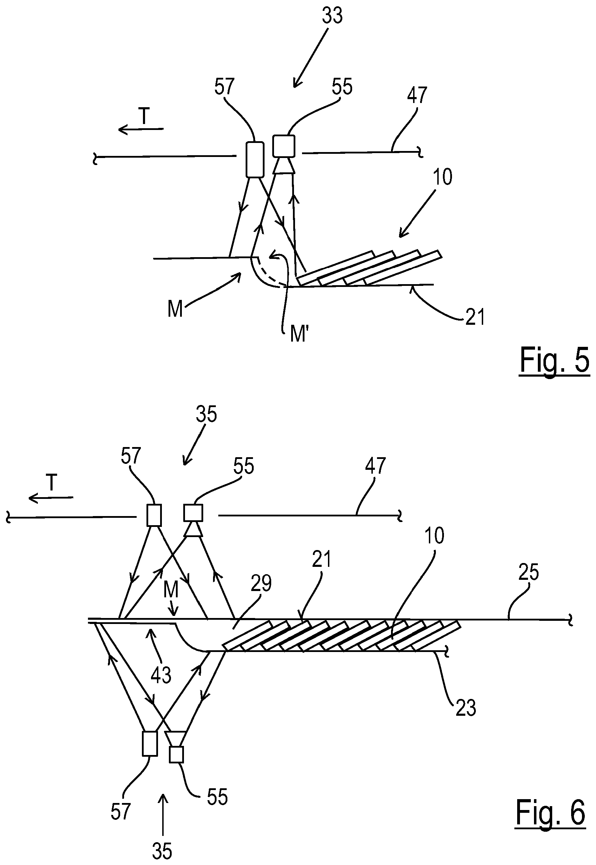

Fig. 5 zeigt schematisch in einer Seitenansicht, wie die obere Messeinrichtung 33 (vgl. Fig. 1) ausgebildet und angeordnet sein kann, um beispielsweise die Lage einer Portion 10 relativ zur Muldenkante M zu bestimmen. Hierzu wird auch auf die entsprechende Fig. 2 Bezug genommen. Die Messeinrichtung 33 ermittelt folglich von oben den Abstand W, der von dem vorgegebenen Sollabstand W' abweicht, weshalb ein Verpackungsfehler vorliegt.

Die Messeinrichtung 33 umfasst eine Lichtquelle 57 sowie eine Kamera 55, die in Bezug auf das Maschinengestell 47 der Verpackungsmaschine feststehend angeordnet sind. Der hier nicht dargestellten Steuereinrichtung 41 (vgl. Fig. 1), mit der die Messeinrichtung 33 verbunden ist, ist folglich die Position der Messeinrichtung 33 im Bezugssystem "Maschinengestell 47" bekannt. Die Steuereinrichtung 41 kann folglich durch Auswerten der von der Kamera 55 aufgenommenen Bilder feststellen, ob die im Erfassungsbereich der Kamera 55 liegende Muldenkante M im Bezugssystem "Maschinengestell 47" korrekt positioniert ist oder - wie im Beispiel der Fig. 5 dargestellt - nicht die korrekte Position in Transportrichtung T aufweist.

Die Lichtquelle 57 dient dazu, den von der Kamera 55 zu erfassenden Messbereich auszuleuchten. Das Ausleuchten durch die Lichtquelle 57 kann flächig erfolgen, wobei lediglich dafür gesorgt wird, dass der Messbereich ausreichend hell ist, um von der Kamera 55 in bestimmungsgemäßer Weise erfasst werden zu können. Alternativ können mit der Lichtquelle 57 Muster auf den Messbereich projiziert werden, beispielsweise eine oder mehrere Linien oder ein Liniengitter. Die Form des jeweiligen Musters auf der Verpackung 21 ist charakteristisch und kann von der Kamera 55 erfasst und von einer geeigneten Bildverarbeitungssoftware in der Steuereinrichtung 41 erkannt und ausgewertet werden. Verpackungsfehler, wie beispielsweise eine Fehlpositionierung der Muldenkante M gemäß Fig. 5, haben eine geänderte Form des projizierten Musters auf der Verpackung 21 zur Folge. Folglich kann durch diese Abweichung zwischen einem während des Betriebs aufgenommenen Ist-Bildes und einem Referenzbild das Vorhandensein und auch das Ausmaß eines jeweiligen Verpackungsfehlers von der Steuereinrichtung 41 erkannt bzw. ermittelt werden kann.

Die Erfassung des Messbereiches kann bei relativ zum Maschinengestell 47 und somit zur Messeinrichtung 33 ruhender Verpackung 21 erfolgen. Alternativ kann die Verpackung 21 während der Messung an der Messeinrichtung 33 vorbeibewegt werden.

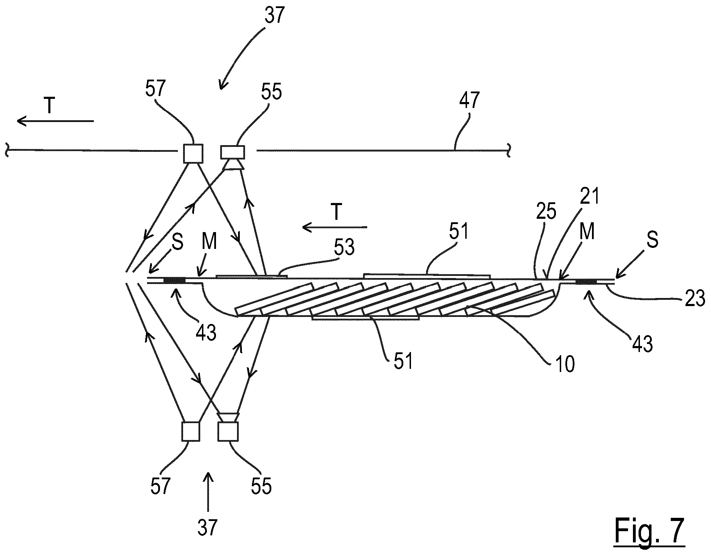

Die vorstehenden grundsätzlichen Ausführungen gelten entsprechend für die Messanordnungen gemäß Fig. 6 und Fig. 7.

Fig. 6 zeigt eine mögliche Anordnung von Messeinrichtungen 35 stromabwärts der Siegelstation 15 (vgl. Fig. 1). Eine Messeinrichtung 35 ist oberhalb der Verpackungen 21 und eine weitere Messeinrichtung 35 unterhalb der Verpackungen 21 angeordnet. Jede Messeinrichtung 35 umfasst wiederum eine Lichtquelle 57 sowie eine Kamera 55. Die Erfassungsbereiche der Messeinrichtungen 35 sind jeweils so gewählt, dass der in Transportrichtung T gemessene Abstand zwischen der in Transportrichtung T vorderen Siegelstelle 43 der Verpackung 21 und der Muldenkante M gemäß der vorstehend beschriebenen Fig. 3 gemessen werden kann.

Fig. 6 zeigt, dass in der Unterfolie 23 die auch als Mulde bezeichnete Vertiefung 29 ausgebildet ist, die den in Transportrichtung T vorne liegenden Muldenrand M definiert. In der Vertiefung 29 der Verpackung 21 befindet sich eine Portion 10. Die Verpackung 21 ist durch die Oberfolie 25 verschlossen, die an einer umlaufenden Siegelnaht 43 (vgl. Fig. 3) mit der Unterfolie 23 verbunden ist, um die Vertiefung 29 gasdicht zu verschließen. Dies wird auch als Ansiegeln der Oberfolie 25 an die Unterfolie 23 bezeichnet.

In den von den Kameras 55 gelieferten Bildern kann die Bildverarbeitungssoftware der Steuereinrichtung 41 die Siegelnaht 43 und die Muldenkante M erkennen und jeweils deren Lage relativ zum Maschinengestell 47 oder deren Relativlage untereinander bestimmen. Da der die Siegelnaht 43 und die Muldenkante M umfassende Abschnitt der Verpackung 21 sowohl von oben als auch von unten erfasst wird, stehen der Steuereinrichtung 41 mehr Informationen zur Verfügung, wodurch die jeweiligen Merkmale der Verpackung 21 - hier die Siegelnaht 43 und die Muldenkante M - zuverlässiger erkannt werden können.

In dem Ausführungsbeispiel der Fig. 7, zu dem auf die Beschreibung der Fig. 4 verwiesen wird, sind wiederum eine obere Messeinrichtung 37 und eine untere Messeinrichtung 37 vorgesehen. Diese Messeinrichtungen 37 sind beispielsweise stromabwärts der für die Querrichtung zuständigen Trennstation 17 (vgl. Fig. 1) angeordnet. Abweichend von dem Ausführungsbeispiel der Fig. 1 ist hier zusätzlich die unterhalb der Verpackungen 21 angeordnete Messeinrichtung 37 vorgesehen.

Wie beim Ausführungsbeispiel der Fig. 4 sind die Verpackungen 21 jeweils auf ihrer Oberseite mit einem Etikett 51 und einer Bedruckung 53 versehen. Zusätzlich befindet sich ein Etikett 51 auf der Unterseite der Verpackung 21. Eine Etikettierstation, die Etiketten auf die Unterseiten der Verpackungen 21 aufbringen kann, ist in dem Ausführungsbeispiel der Fig. 1 nicht dargestellt, kann bei dieser Verpackungsmaschine aber zusätzlich vorgesehen sein.

Wie bereits im Zusammenhang mit Fig. 4 erläutert, kann die mit den Messeinrichtungen 37 verbundene Steuereinrichtung 41 der Verpackungsmaschine anhand der von den Kameras 55 aufgenommenen Bildern beispielsweise die folgenden Eigenschaften der Verpackungen 21 erkennen und mit jeweiligen Sollvorgaben vergleichen:
- Die Lage der in Transportrichtung T vorderen Schneidkante S relativ zur Siegelnaht 43 oder zur Muldenkante M
- Die Lage der in Transportrichtung T vorderen Kante der Bedruckung 53 (und damit die Lage der Oberfolie 23 als solche) relativ zur Schneidkante S, zur Siegelnaht 43 oder zur Muldenkante M.
- Die Lage des oberen Etiketts 51 oder des unteren Etiketts 51 zur Schneidkante S, zur Siegelnaht 43 oder zur Muldenkante M.

Wie Fig. 7 zeigt, sind die Erfassungsbereiche der Messeinrichtungen 37 jeweils nicht derart groß gewählt, dass gleichzeitig die in Transportrichtung T vordere Schneidkante S, die Siegelnaht 43, die Muldenkante M und die vordere Kante der Bedruckung 53 einerseits und die vordere Kante des jeweiligen Etiketts 51 andererseits erfasst werden können. Die Einbeziehung der erfassten Position der Etiketten 51 erfolgt dadurch, dass die Verpackungen in Transportrichtung T und somit durch die Erfassungsbereiche der Messeinrichtungen 37 hindurchbewegt werden. Auf diese Weise kann auch im - bezogen auf die Transportrichtung T - hinteren Bereich der Verpackungen 21 eine Messung von Verpackungsfehlern erfolgen.

### Bezugszeichenliste

- 10: Produkt
- 11: Formstation
- 11a: Oberwerkzeug
- 11b: Unterwerkzeug
- 11c: Stellantrieb
- 13: Einbringstation
- 13a: Förderband
- 13b: Förderband
- 14: Zufuhrstation
- 15: Siegelstation
- 15a: Oberwerkzeug
- 15b: Unterwerkzeug
- 15c: Stellantrieb
- 16: Etikettierstation
- 17: Trennstation (Querrichtung)
- 17a: Stellantrieb
- 19: Trennstation (Längsrichtung)
- 19a: Stellantrieb
- 21: Verpackung
- 23: Unterfolie
- 23a: Vorratsrolle
- 25: Oberfolie
- 25a: Vorratsrolle
- 27: Transporteinrichtung (Transportkette) für Unterfolie
- 29: Vertiefung
- 31: Messeinrichtung
- 33: Messeinrichtung
- 34: Messeinrichtung
- 35: Messeinrichtung
- 36: Messeinrichtung
- 37: Messeinrichtung
- 39: Messeinrichtung
- 40: Messeinrichtung
- 41: Steuereinrichtung
- 43: Siegelstelle
- 45: Bedieneinheit
- 47: Maschinengestell
- 49: Greifer
- 50: Roboter
- 51: Etikett
- 53: Bedruckung
- 55: Kamera
- 57: Lichtquelle

- T: Transportrichtung
- M: Muldenkante
- S: Schneidkante

## Patentansprüche

1. Verpackungsmaschine mit einer Mehrzahl von entlang einer Transportrichtung (T) hintereinander angeordneten, insbesondere taktweise in einem gemeinsamen Maschinentakt betriebenen, Arbeitsstationen (11, 13, 14, 15, 16, 17, 19) zum automatischen Herstellen von mit Produkten (10), insbesondere Lebensmittelprodukten, gefüllten Verpackungen (21) aus wenigstens einer Unterfolie (23), die mittels einer Transporteinrichtung (27) entlang der Maschine bewegt wird, und wenigstens einer Oberfolie (25), die auf die Unterfolie (23) aufgebracht wird, um in der Unterfolie (23) durch Umformen erzeugte und die Produkte (10) enthaltende Vertiefungen (29) zu verschließen, wobei
- zumindest eine Messeinrichtung (31, 33, 34, 35, 36, 37, 39, 40) vorgesehen ist, die dazu angeordnet und eingerichtet ist, im Entstehen befindliche Verpackungen (21) zu vermessen,
**dadurch gekennzeichnet, dass**
- eine Steuereinrichtung (41) vorgesehen ist, die dazu konfiguriert ist, anhand der Messungen der Messeinrichtung (31, 33, 34, 35, 36, 37, 39, 40) zumindest einen Verpackungsfehler zu erkennen, der an wenigstens einer der Arbeitsstationen (11, 13, 14, 15, 16, 17, 19) entstanden ist, und den Betrieb an zumindest einer der Arbeitsstationen (11, 13, 14, 15, 16, 17, 19) derart zu regeln, dass der Verpackungsfehler beseitigt oder reduziert wird,
wobei der Verpackungsfehler eine Abweichung von vorgegebenen Sollmaßen darstellt, die ein oder mehrere Merkmale der Verpackung betreffen, wobei die Steuereinrichtung dazu konfiguriert ist, den Verpackungsfehler anhand der Relativlage wenigstens zweier Merkmale der Verpackung zu erkennen, wenn ein gemessener Ist-Wert der Relativlage von einem Soll-Wert der Relativlage abweicht,
wobei die wenigstens zwei Merkmale aus einer die folgenden Merkmale umfassenden Gruppe ausgewählt sind:
- Vertiefung der Unterfolie;
- mittels einer Siegelstation zum Verschließen der Vertiefungen hergestellte Siegelstelle zwischen Unterfolie und Oberfolie;
- Bedruckung der Unterfolie, der Oberfolie und/oder der Verpackung;
- Etikett auf der Unterfolie, der Oberfolie und/oder der Verpackung;
- Markierung auf der Unterfolie, der Oberfolie und/oder der Verpackung;
- Trennstelle der Unterfolie, der Oberfolie und/oder der Verpackung,
und
wobei eine Bearbeitungsposition zumindest einer Arbeitsstation (11, 13, 14, 15, 16, 17, 19) und/oder wenigstens eines Arbeitswerkzeuges (11a, 11b, 15a, 15b) zumindest einer Arbeitsstation (11, 13, 14, 15, 16, 17, 19) in Transportrichtung (T) und/oder senkrecht zur Transportrichtung (T) verstellbar ist,
wobei die Steuereinrichtung (41) dazu konfiguriert ist, bei der Regelung eine Information zur Verstellung zu erzeugen, die repräsentiert, wie die Bearbeitungsposition zu verstellen ist,
wobei die Arbeitsstation und/oder das Arbeitswerkzeug einen steuerbaren Stellantrieb (11c, 15c) aufweist und die Steuereinrichtung (41) dazu konfiguriert ist, die Arbeitsstation und/oder das Arbeitswerkzeug in Abhängigkeit von der Information zur Verstellung automatisch mittels des Stellantriebs (11c, 15c) zu verstellen,
wobei die Regelung automatisch erfolgt.

2. Verpackungsmaschine nach Anspruch 1,
wobei eine Bearbeitungsposition zumindest einer Arbeitsstation und/oder wenigstens eines Arbeitswerkzeuges zumindest einer Arbeitsstation relativ zu einem Maschinengestell (47) und/oder relativ zu der Transporteinrichtung (27) für die Unterfolie (23) verstellbar ist.

3. Verpackungsmaschine nach einem der vorhergehenden Ansprüche,
wobei die Steuereinrichtung (41) dazu konfiguriert ist, die Information zur Verstellung auszugeben, und wobei eine Bedieneinheit (45) vorgesehen ist, mittels welcher ein Bediener die Arbeitsstation und/oder das Arbeitswerkzeug in Abhängigkeit von der Information zur Verstellung verstellen kann.

4. Verfahren zum Betrieb einer Verpackungsmaschine mit einer Mehrzahl von entlang einer Transportrichtung (T) hintereinander angeordneten Arbeitsstationen (11, 13, 14, 15, 16, 17, 19) zum automatischen Herstellen von mit Produkten (10), insbesondere Lebensmittelprodukten, gefüllten Verpackungen (21) aus wenigstens einer Unterfolie (23), die mittels einer Transporteinrichtung (27) entlang der Maschine bewegt wird, und wenigstens einer Oberfolie (25), die auf die Unterfolie (23) aufgebracht wird, um in der Unterfolie (23) durch Umformen erzeugte und die Produkte (10) enthaltende Vertiefungen (29) zu verschließen, bei dem
- mittels zumindest einer Messeinrichtung (31, 33, 34, 35, 36, 37, 39, 40) im Entstehen befindliche Verpackungen (21) vermessen werden,
**dadurch gekennzeichnet, dass**
- mittels einer Steuereinrichtung (41) anhand der Messungen der Messeinrichtung (31, 33, 34, 35, 36, 37, 39, 40) ein an wenigstens einer der Arbeitsstationen (11, 13, 14, 15, 16, 17, 19) entstandener Verpackungsfehler erkannt und zur Beseitigung oder Reduzierung des Verpackungsfehlers der Betrieb an zumindest einer der Arbeitsstationen (11, 13, 14, 15, 16, 17, 19) geregelt wird, wobei die Regelung automatisch erfolgt,
wobei der Verpackungsfehler eine Abweichung von vorgegebenen Sollmaßen darstellt, die ein oder mehrere Merkmale der Verpackung betreffen, wobei zum Erkennen des Verpackungsfehlers ein gemessener Ist-Wert der Relativlage wenigstens zweier Merkmale der Verpackung (21) mit einem Referenz-Wert verglichen wird,
wobei die wenigstens zwei Merkmale aus einer die folgenden Merkmale umfassenden Gruppe ausgewählt werden:
- Vertiefung der Unterfolie;
- mittels einer Siegelstation zum Verschließen der Vertiefungen hergestellte Siegelstelle zwischen Unterfolie und Oberfolie;
- Bedruckung der Unterfolie, der Oberfolie und/oder der Verpackung;
- Etikett auf der Unterfolie, der Oberfolie und/oder der Verpackung;
- Markierung auf der Unterfolie, der Oberfolie und/oder der Verpackung;
- Trennstelle der Unterfolie, der Oberfolie und/oder der Verpackung, und
wobei die Regelung umfasst, dass die Bearbeitungsposition zumindest einer Arbeitsstation und/oder die Bearbeitungsposition wenigstens eines Arbeitswerkzeugs einer Arbeitsstation verstellt wird.

5. Verfahren nach Anspruch 4,
wobei nach Erkennen eines Verpackungsfehlers an einer im Entstehen befindlichen Verpackung (21) eine Rückverfolgung dieser Verpackung (21) durchgeführt wird, um festzustellen, an welcher oder welchen der Arbeitsstationen der Verpackungsfehler entstanden ist.

6. Verfahren nach Anspruch 4 oder 5,
wobei der Betrieb nur an derjenigen Arbeitsstation geregelt wird, nach welcher die Verpackungen (21) vermessen werden, und/oder
wobei die Analyse des Verpackungsfehlers umfasst, dass ermittelt wird, welche Arbeitsstation in welcher Weise zu dem Verpackungsfehler beigetragen hat.

7. Verfahren nach einem der Ansprüche 4 bis 6,
wobei der Betrieb an mehreren Arbeitsstationen in Abhängigkeit von einer Analyse des Verpackungsfehlers geregelt wird, und/oder
wobei der Betrieb an mehreren Arbeitsstationen derart geregelt wird, dass Verstellwege an den Arbeitsstationen minimiert werden.

8. Verfahren nach einem der Ansprüche 4 bis 7,
wobei zum Erkennen eines Verpackungsfehlers ein aufgenommenes Ist-Bild der Verpackung (21) mit einem Referenz-Bild verglichen wird.

9. Verfahren nach einem der Ansprüche 4 bis 8,
wobei der Ist-Wert der Relativlage der beiden Merkmale aus einem gemessenen Ist-Wert des einen Merkmals und einem gemessenen Ist-Wert des anderen Merkmals bestimmt wird,
wobei insbesondere als eines der Merkmale ein Merkmal der Unterfolie (23) und als ein weiteres der Merkmale ein Merkmal der Oberfolie (25) verwendet wird.

10. Verfahren nach einem der Ansprüche 4 bis 9,
wobei für den Verpackungsfehler eine Trendüberwachung durchgeführt und in den Betrieb zumindest einer der Arbeitsstationen erst dann eingegriffen wird, wenn der Verpackungsfehler zumindest einen vorgegebenen oder vorgebbaren Schwellwert überschreitet oder unterschreitet.

11. Verfahren nach einem der Ansprüche 4 bis 10,
wobei die Regelung in Abhängigkeit von zumindest einem Verpackungsparameter erfolgt, und/oder
wobei in die Regelung die Daten von einer oder mehreren weiteren Mess-, Kontroll- oder Überwachungseinrichtungen der Verpackungsmaschine einbezogen werden, insbesondere einer Einbringstation (13) zum Einbringen der Produkte (10) in die Vertiefungen (29) der Unterfolie (23).

## Claims

1. A packaging machine comprising a plurality of work stations (11, 13, 14, 15, 16, 17, 19), which are arranged behind one another along a transport direction (T) and which are in particular operated cyclically in a common machine cycle, for automatically producing packages (21) filled with products (10), in particular food products, from at least one bottom film (23), which is moved along the machine by means of a transport device (27), and at least one top film (25) which is applied to the bottom film (23) in order to close recesses (29) which are produced in the bottom film (23) by reshaping and which contain the products (10), wherein
- at least one measurement device (31, 33, 34, 35, 36, 37, 39, 40) is provided that is arranged and configured to measure packages (21) in the process of being produced,
**characterized in that**
- a control device (41) is provided that is configured to recognize, based on the measurements of the measurement device (31, 33, 34, 35, 36, 37, 39, 40), at least one packaging defect that has originated at at least one of the work stations (11, 13, 14, 15, 16, 17, 19) and to control the operation at at least one of the work stations (11, 13, 14, 15, 16, 17, 19) such that the packaging defect is eliminated or reduced,
wherein the packaging defect represents a deviation from predefined desired dimensions which relate to one or more features of the package, wherein the control device is configured to recognize the packaging defect based on the relative position of at least two features of the package when a measured actual value of the relative position deviates from a desired value of the relative position,
wherein the at least two features are selected from a group comprising the following features:
- recess of the bottom film;
- sealing point, which is produced by means of a sealing station for closing the recesses, between the bottom film and the top film;
- printing on the bottom film, the top film and/or the package;
- label on the bottom film, the top film and/or the package;
- marking on the bottom film, the top film and/or the package;
- separation point of the bottom film, the top film and/or the package,
and
wherein a processing position of at least one work station (11, 13, 14, 15, 16, 17, 19) and/or of at least one working tool (11a, 11b, 15a, 15b) of at least one work station (11, 13, 14, 15, 16, 17, 19) is adjustable in the transport direction (T) and/or perpendicular to the transport direction (T), wherein the control device (41) is configured to generate, during the control, information on the adjustment that represents how the processing position is to be adjusted,
wherein the work station and/or the working tool has/have a controllable actuating drive (11c, 15c) and the control device (41) is configured to automatically adjust the work station and/or the working tool in dependence on the information on the adjustment by means of the actuating drive (11c, 15c),
wherein the control takes place automatically.

2. A packaging machine according to claim 1,
wherein a processing position of at least one work station and/or of at least one working tool of at least one work station is adjustable relative to a machine frame (47) and/or relative to the transport device (27) for the bottom film (23).

3. A packaging machine according to one of the preceding claims,
wherein the control device (41) is configured to output the information on the adjustment, and wherein an operating unit (45) is provided, by means of which an operator can adjust the work station and/or the working tool in dependence on the information on the adjustment.

4. A method for operating a packaging machine comprising a plurality of work stations (11, 13, 14, 15, 16, 17, 19), which are arranged behind one another along a transport direction (T), for automatically producing packages (21) filled with products (10), in particular food products, from at least one bottom film (23), which is moved along the machine by means of a transport device (27), and at least one top film (25) which is applied to the bottom film (23) in order to close recesses (29) which are produced in the bottom film (23) by reshaping and which contain the products (10), in which
- by means of at least one measurement device (31, 33, 34, 35, 36, 37, 39, 40), packages (21) in the process of being produced are measured,
**characterized in that**,
- by means of a control device (41), based on the measurements of the measurement device (31, 33, 34, 35, 36, 37, 39, 40), a packaging defect that has originated at at least one of the work stations (11, 13, 14, 15, 16, 17, 19) is recognized and the operation at at least one of the work stations (11, 13, 14, 15, 16, 17, 19) is controlled in order to eliminate or reduce the packaging defect, wherein the control takes place automatically,
wherein the packaging defect represents a deviation from predefined desired dimensions which relate to one or more features of the package, wherein, for recognizing the packaging defect, a measured actual value of the relative position of at least two features of the package (21) is compared with a reference value,
wherein the at least two features are selected from a group comprising the following features:
- recess of the bottom film;
- sealing point, which is produced by means of a sealing station for closing the recesses, between the bottom film and the top film;
- printing on the bottom film, the top film and/or the package;
- label on the bottom film, the top film and/or the package;
- marking on the bottom film, the top film and/or the package;
- separation point of the bottom film, the top film and/or the package,
and
wherein the control comprises adjusting the processing position of at least one work station and/or the processing position of at least one working tool of a work station.

5. A method according to claim 4,
wherein, after recognizing a packaging defect at a package (21) in the process of being produced, a tracking of this package (21) is carried out in order to determine at which work station or work stations the packaging defect originated.

6. A method according to claim 4 or 5,
wherein the operation is controlled only at that work station after which the packages (21) are measured, and/or
wherein the analysis of the packaging defect comprises determining which work station contributed to the packaging defect and in what way.

7. A method according to any one of the claims 4 to 6,
wherein the operation at a plurality of work stations is controlled in dependence on an analysis of the packaging defect, and/or
wherein the operation at a plurality of work stations is controlled such that adjustment paths at the work stations are minimized.

8. A method according to any one of the claims 4 to 7,
wherein, for recognizing a packaging defect, a recorded actual image of the package (21) is compared with a reference image.

9. A method according to any one of the claims 4 to 8,
wherein the actual value of the relative position of the two features is determined from a measured actual value of the one feature and a measured actual value of the other feature,
wherein, in particular, a feature of the bottom film (23) is used as one of the features and a feature of the top film (25) is used as a further one of the features.

10. A method according to any one of the claims 4 to 9,
wherein a trend monitoring is performed for the packaging defect and an intervention in the operation of at least one of the work stations occurs only when the packaging defect exceeds or falls below at least one predefined or predefinable threshold value.

11. A method according to any one of the claims 4 to 10,
wherein the control takes place in dependence on at least one packaging parameter, and/or
wherein the data of one or more further measurement, inspection or monitoring devices of the packaging machine, in particular of an insertion station (13) for inserting the products (10) into the recesses (29) of the bottom film (23), are incorporated into the control.

## Revendications

1. Machine d'emballage comprenant une pluralité de postes de travail (11, 13, 14, 15, 16, 17, 19) agencés les uns derrière les autres le long d'une direction de transport (T), en particulier exploités de manière cadencée selon un cycle commun de machine, pour fabriquer automatiquement des emballages (21) remplis de produits (10), en particulier de produits alimentaires, à partir d'au moins un film inférieur (23) qui est déplacé le long de la machine au moyen d'un dispositif de transport (27), et d'au moins un film supérieur (25) qui est appliqué sur le film inférieur (23) afin de fermer des cavités (29) produites par formage dans le film inférieur (23) et contenant les produits (10), dans laquelle
- il est prévu au moins un dispositif de mesure (31, 33, 34, 35, 36, 37, 39, 40) qui est agencé et configuré pour mesurer des emballages (21) en cours de formation,
**caractérisé en ce que**
- il est prévu un moyen de commande (41) qui est configuré pour détecter, sur la base des mesures du dispositif de mesure (31, 33, 34, 35, 36, 37, 39, 40), au moins un défaut d'emballage qui est apparu au niveau d'au moins un des postes de travail (11, 13, 14, 15, 16, 17, 19), et pour réguler le fonctionnement au niveau d'au moins un des postes de travail (11, 13, 14, 15, 16, 17, 19) de sorte que le défaut d'emballage soit éliminé ou réduit,
dans laquelle le défaut d'emballage représente un écart par rapport à des dimensions de consigne prédéfinies qui concernent une ou plusieurs caractéristiques de l'emballage,
dans laquelle le moyen de commande est configuré pour détecter le défaut d'emballage sur la base de la position relative d'au moins deux caractéristiques de l'emballage lorsqu'une valeur réelle mesurée de la position relative s'écarte d'une valeur de consigne de la position relative,
dans laquelle lesdites au moins deux caractéristiques sont sélectionnées à partir d'un groupe comprenant les caractéristiques suivantes :
- cavité du film inférieur ;
- zone de scellement produite au moyen d'un poste de scellement pour fermer les cavités entre le film inférieur et le film supérieur ;
- impression du film inférieur, du film supérieur et/ou de l'emballage ;
- étiquette sur le film inférieur, le film supérieur et/ou l'emballage ;
- marquage sur le film inférieur, le film supérieur et/ou l'emballage ;
- point de séparation du film inférieur, du film supérieur et/ou de l'emballage,
et
dans laquelle une position de traitement d'au moins un poste de travail (11, 13, 14, 15, 16, 17, 19) et/ou d'au moins un outil de travail (11a, 11b, 15a, 15b) d'au moins un poste de travail (11, 13, 14, 15, 16, 17, 19) est réglable dans la direction de transport (T) et/ou perpendiculairement à la direction de transport (T),
dans laquelle le moyen de commande (41) est configuré pour générer, lors de la régulation, une information relative au réglage qui représente la manière dont la position de traitement doit être réglée,
dans laquelle le poste de travail et/ou l'outil de travail comportent un actionneur commandable (11c, 15c) et le moyen de commande (41) est configuré pour régler automatiquement le poste de travail et/ou l'outil de travail en dépendance de l'information relative au réglage au moyen de l'actionneur (11c, 15c),
dans laquelle la régulation est effectuée automatiquement.

2. Machine d'emballage selon la revendication 1,
dans laquelle une position de traitement d'au moins un poste de travail et/ou d'au moins un outil de travail d'au moins un poste de travail est réglable par rapport à un châssis de machine (47) et/ou par rapport au dispositif de transport (27) pour le film inférieur (23).

3. Machine d'emballage selon l'une des revendications précédentes,
dans laquelle le moyen de commande (41) est configuré pour délivrer l'information relative au réglage, et dans laquelle il est prévu une unité de commande (45) au moyen de laquelle un opérateur peut régler le poste de travail et/ou l'outil de travail en dépendance de l'information relative au réglage.

4. Procédé pour faire fonctionner une machine d'emballage comprenant une pluralité de postes de travail agencés les uns derrière les autres le long d'une direction de transport (T) pour fabriquer automatiquement des emballages (21) remplis de produits (10), en particulier de produits alimentaires, à partir d'au moins un film inférieur (23) qui est déplacé le long de la machine au moyen d'un dispositif de transport (27), et d'au moins un film supérieur (25) qui est appliqué sur le film inférieur (23) afin de fermer des cavités (29) produites par formage dans le film inférieur (23) et contenant les produits (10), dans lequel
- au moyen d'au moins un dispositif de mesure (31, 33, 34, 35, 36, 37, 39, 40), des emballages (21) en cours de formation sont mesurés,
**caractérisé en ce que**
- au moyen d'un moyen de commande (41), sur la base des mesures du dispositif de mesure (31, 33, 34, 35, 36, 37, 39, 40), un défaut d'emballage apparu au niveau d'au moins un des postes de travail (11, 13, 14, 15, 16, 17, 19) est détecté et, afin d'éliminer ou de réduire le défaut d'emballage, le fonctionnement au niveau d'au moins un des postes de travail (11, 13, 14, 15, 16, 17, 19) est régulé, la régulation étant effectuée automatiquement,
dans lequel le défaut d'emballage représente un écart par rapport à des dimensions de consigne prédéfinies qui concernent une ou plusieurs caractéristiques de l'emballage,
dans lequel, pour détecter le défaut d'emballage, une valeur réelle mesurée de la position relative d'au moins deux caractéristiques de l'emballage (21) est comparée à une valeur de référence,
dans lequel lesdites au moins deux caractéristiques sont sélectionnées à partir d'un groupe comprenant les caractéristiques suivantes :
- cavité du film inférieur ;
- zone de scellement produite au moyen d'un poste de scellement pour fermer les cavités entre le film inférieur et le film supérieur ;
- impression du film inférieur, du film supérieur et/ou de l'emballage ;
- étiquette sur le film inférieur, le film supérieur et/ou l'emballage ;
- marquage sur le film inférieur, le film supérieur et/ou l'emballage ;
- point de séparation du film inférieur, du film supérieur et/ou de l'emballage,
et
dans lequel la régulation comprend le réglage de la position de traitement d'au moins un poste de travail et/ou de la position de traitement d'au moins un outil de travail d'un poste de travail.

5. Procédé selon la revendication 4,
dans lequel, après détection d'un défaut d'emballage sur un emballage (21) en cours de formation, une traçabilité de cet emballage (21) est effectuée afin de déterminer au niveau de quel poste de travail ou de quels postes de travail le défaut d'emballage est apparu.

6. Procédé selon la revendication 4 ou 5,
dans lequel le fonctionnement est régulé uniquement au niveau du poste de travail après lequel les emballages (21) sont mesurés, et/ou dans lequel l'analyse du défaut d'emballage comprend la détermination du poste de travail qui a contribué au défaut d'emballage et de la manière dont il y a contribué.

7. Procédé selon l'une des revendications 4 à 6,
dans lequel le fonctionnement au niveau de plusieurs postes de travail est régulé en dépendance d'une analyse du défaut d'emballage, et/ou dans lequel le fonctionnement au niveau de plusieurs postes de travail est régulé de sorte que les courses de réglage au niveau des postes de travail soient minimisées.

8. Procédé selon l'une des revendications 4 à 7,
dans lequel, pour détecter un défaut d'emballage, une image réelle enregistrée de l'emballage (21) est comparée à une image de référence.

9. Procédé selon l'une des revendications 4 à 8,
dans lequel la valeur réelle de la position relative des deux caractéristiques est déterminée à partir d'une valeur réelle mesurée de l'une des caractéristiques et d'une valeur réelle mesurée de l'autre caractéristique,
dans lequel, en particulier, une caractéristique du film inférieur (23) est utilisée comme l'une des caractéristiques et une caractéristique du film supérieur (25) est utilisée comme une autre des caractéristiques.

10. Procédé selon l'une des revendications 4 à 9,
dans lequel une surveillance de tendance est effectuée pour le défaut d'emballage et une intervention dans le fonctionnement d'au moins un des postes de travail n'est effectuée que lorsque le défaut d'emballage dépasse ou devient inférieur à au moins une valeur seuil prédéfinie ou définissable.

11. Procédé selon l'une des revendications 4 à 10,
dans lequel la régulation est effectuée en dépendance d'au moins un paramètre d'emballage, et/ou
dans lequel les données provenant d'un ou plusieurs dispositifs supplémentaires de mesure, de contrôle ou de surveillance de la machine d'emballage sont prises en compte dans la régulation, en particulier d'un poste d'introduction (13) pour introduire les produits (10) dans les cavités (29) du film inférieur (23).
